(19) Europäisches Patentamt
European Patent Office
Office européen des brevets

(11) **EP 4 477 419 A2**

(12) **EUROPEAN PATENT APPLICATION**


(43) Date of publication:
**18.12.2024 Bulletin 2024/51**

(21) Application number: **24180911.0**

(22) Date of filing: **07.06.2024**

(51) International Patent Classification (IPC):
***B41J 2/14*** (2006.01) ***B41J 2/175*** (2006.01)
***B41J 2/18*** (2006.01) ***C09D 11/00*** (2014.01)
***B41J 2/21*** (2006.01) ***C09D 11/322*** (2014.01)

(52) Cooperative Patent Classification (CPC):
**B41J 2/14024; B41J 2/14145; B41J 2/175; B41J 2/17596; B41J 2/18; B41J 2/2117; C09D 11/00; C09D 11/322;** B41J 2202/12

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.06.2023 JP 2023095969**



(71) Applicant: **CANON KABUSHIKI KAISHA**
**Tokyo 146-8501 (JP)**

(72) Inventors:
- **TAKAGI, Yosuke**
**Tokyo, 146-8501 (JP)**
- **SANADA, Mikio**
**Tokyo, 146-8501 (JP)**
- **TAKEDA, Shoichi**
**Tokyo, 146-8501 (JP)**
- **KANEKO, Yoshiyuki**
**Tokyo, 146-8501 (JP)**
- **TODA, Kyosuke**
**Tokyo, 146-8501 (JP)**
- **ISHIDA, Koichi**
**Tokyo, 146-8501 (JP)**
- **SATO, Ryo**
**Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**


(54) **INK-JET RECORDING METHOD AND INK FOR USE IN INK-JET RECORDING**


(57) An ink-jet recording method includes ejecting an ink from an ink-jet recording head (1). The ink contains titanium oxide and a wax particle. The ink-jet recording head includes an ejection port (13) through which the ink is ejected, a pressure chamber (12) having therein an energy-generating element (15) that generates energy for ejecting the ink, an ejection port portion configured to communicate between the ejection port and the pressure chamber, an individual supply channel (18, 130) communicating with the pressure chamber and configured to supply the ink to the pressure chamber, and an individual collecting channel (19, 140) communicating with the pressure chamber and configured to collect the ink from the pressure chamber.


FIG. 3B

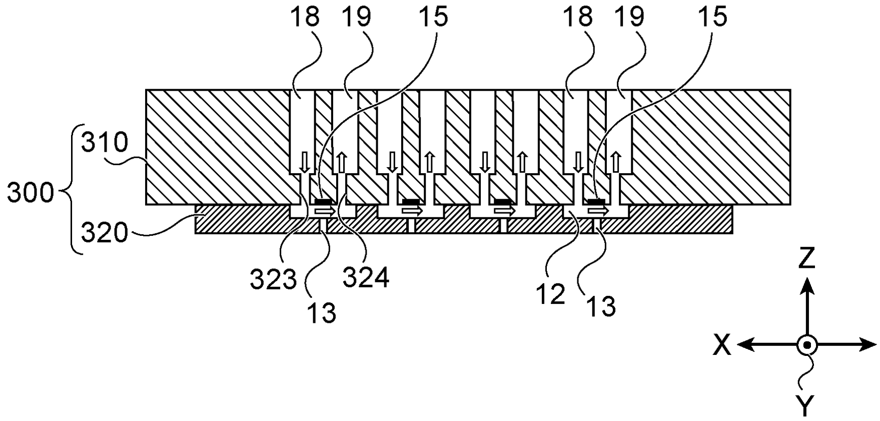


EP 4 477 419 A2

## Description

BACKGROUND OF THE INVENTION

Field of the Invention

The present invention relates to an ink-jet recording method and an ink for use in an ink-jet recording.

Description of the Related Art

In recent years, ink-jet recording apparatuses have been widely used for outputting advertisements and exhibits using recording media such as paper and resin films. For example, in order to form clear color images even on transparent recording media, a white ink is used in combination with black and basic color inks (hereinafter, these may be collectively referred to as color inks). Specifically, a recording method is used in which a white ink is applied in advance to an area of a transparent recording medium including a region where an image is to be recorded to perform background color treatment and color inks are applied thereon, or the inks are applied in the reverse order (what is called, back printing).

Titanium oxide is widely used as the coloring material of a white ink because it is available at a low cost and has good properties necessary for the white ink, such as whiteness and the hiding property. However, titanium oxide has a problem of being likely to precipitate. Hitherto, from the viewpoint of suppressing precipitation of titanium oxide in a white ink, a method of improving dispersion stability by subjecting titanium oxide to surface treatment have been studied. For example, PCT Japanese Translation Patent Publication No. 2017-521348 has proposed a method for producing a dry titanium dioxide product, the method including subjecting titanium oxide to surface treatment with silica, further subjecting the titanium oxide to surface treatment with a silane coupling agent, and performing drying to covalently bond part of the silane coupling agent to the surfaces of particles of the titanium oxide.

International Publication No. 2018/190848 has proposed an ink that contains titanium oxide surface-treated with alumina, a monovalent metal salt, and alumina fine particles.

SUMMARY OF THE INVENTION

The present invention in its first aspect provides an ink-jet recording method as specified in claims 1 and 13. Preferable or optional features are specified in claims 2 to 12. A further aspect provides an ink for ink-jet recording as specified in claim 14. Preferable or optional features are specified in claims 15 and 16.

Further features of the present invention will become apparent from the following description of exemplary embodiments with reference to the attached drawings.

BRIEF DESCRIPTION OF THE DRAWINGS

Figs. 1A and 1B are diagrams illustrating a liquid ejecting apparatus.
Fig. 2 is an exploded perspective view of a liquid ejecting head.
Fig. 3A is a longitudinal sectional view of a liquid ejecting head and Fig. 3B is an enlarged sectional view of an ejection module.
Fig. 4 is a schematic external view of a circulation unit.
Fig. 5 is a longitudinal sectional view illustrating a circulation path.
Fig. 6 is a block diagram that schematically illustrates a circulation path.
Figs. 7A, 7B, and 7C are sectional views illustrating an example of a pressure adjusting unit.
Figs. 8A and 8B are external perspective views of a circulation pump.
Fig. 9 is a sectional view that is taken along line IX-IX in Fig. 8A and illustrates the circulation pump.
Figs. 10A, 10B, 10C, 10D, and 10E are views illustrating a flow of an ink in a liquid ejecting head.
Figs. 11A and 11B are schematic views illustrating a circulation path in an ejection unit.
Fig. 12 is a view illustrating an opening plate.
Fig. 13 is a view illustrating an ejection element substrate.
Figs. 14A, 14B, and 14C are sectional views illustrating a flow of an ink in an ejection unit.
Figs. 15A and 15B are sectional views illustrating the vicinity of an ejection port.
Figs. 16A and 16B are sectional views illustrating the vicinity of an ejection port of a comparative example.
Fig. 17 is a view illustrating an ejection element substrate of a comparative example.
Figs. 18A and 18B are views illustrating a channel configuration of a liquid ejecting head.

Fig. 19 is a view illustrating a connection state of a main body and a liquid ejecting head of a liquid ejecting apparatus.
Figs. 20A, 20B, and 20C are views illustrating a channel configuration of a liquid ejecting head with a common liquid chamber circulation system.

DESCRIPTION OF THE EMBODIMENTS

The inventors of the present invention have found that precipitation is not sufficiently suppressed by merely subjecting titanium oxide to surface treatment. It has been also found that an improvement in scratch resistance of the resulting image is also desired. The present invention provides an ink-jet recording method that enables ejection of a white ink containing titanium oxide while suppressing precipitation and that also provides an image having improved scratch resistance. The present inventors have found that, first, in order to improve scratch resistance of the resulting image, a white ink needs to contain a particle formed of wax (wax particle). That is, use of an ink containing a wax particle enables recording of an image having further improved scratch resistance.

However, it has also been found that when a white ink further contains a wax particle in addition to titanium oxide, which is originally likely to precipitate, the white ink may have insufficient ejection stability in some cases. Moreover, when an ink containing titanium oxide is left to stand for a long period of time in a state where the ink does not flow or flows slowly, the ink precipitates in a path to which the ink is supplied and may stick in some cases, and consequently, the ink may not be stably supplied. When an ink containing a wax particle is concentrated by evaporation of moisture from an ejection port, the viscosity thereof tends to increase; therefore, high energy is necessary for ejecting the ink. Consequently, for example, when an image pattern that requires long ejection interval is recorded, sufficient ink ejection stability may not be obtained in some cases.

In view of the above, the present inventors have studied a method for solving the problems by the configuration of a liquid ejecting apparatus that ejects an ink and have arrived at a configuration in which the ink is circulated in an ink-jet recording head that ejects the ink. The circulation of the ink can suppress precipitation and sticking in a path to which the ink is supplied. In addition, since the concentration of the ink due to evaporation of moisture from an ejection port is also suppressed, a decrease in the ejection stability of the ink can also be suppressed.

The circulation system of an ink is broadly divided into two systems. A first system is a pressure chamber circulation system, and a second system is a common liquid chamber circulation system.

First, an ink-jet recording head for the pressure chamber circulation system includes an ejection port through which an ink is ejected, a pressure chamber having therein an energy-generating element that generates energy for ejecting the ink, an ejection port portion configured to communicate between the ejection port and the pressure chamber, an individual supply channel communicating with the pressure chamber and configured to supply the ink to the pressure chamber, and an individual collecting channel communicating with the pressure chamber and configured to collect the ink from the pressure chamber. Specifically, the ink circulates through a circulation path including the individual supply channel, the pressure chamber, and the individual collecting channel. The circulation method employed may be any publicly known method. In particular, a pump configured to cause the ink in the individual collecting channel to flow into the individual supply channel may be provided. In this case, the circulation path of the ink includes the pump, the individual supply channel, the pressure chamber, and the individual collecting channel.

In this case, the volume of the ink circulation path where the ink circulates in the ink-jet recording head is preferably 30 mL or less, more preferably 15 mL or less. The volume of the ink circulation path is preferably 5 mL or more, and in particular, more preferably 5 mL or more and 15 mL or less.

In particular, in order to obtain the effects of the present invention at a higher level, the pressure chamber circulation system may have a configuration (circulation in nozzle) in which the ink circulates to a meniscus position of the ink in the ejection port in the ejection port portion. Specifically, when a circulatory flow is generated such that the ink is caused to flow from the outside (such as a common liquid chamber or a common supply channel described later) into the pressure chamber through the individual supply channel and is caused to flow from the pressure chamber to the outside (such as a common liquid chamber or a common collecting channel described later) through the individual collecting channel, a flow of the ink may be generated such that the ink flowing from the pressure chamber into the ejection port portion reaches a meniscus position of the ink formed in the ejection port and then returns to the pressure chamber.

Next, the common liquid chamber circulation system will be described. An ink-jet recording head for the common liquid chamber circulation system includes an ejection port through which an ink is ejected, a pressure chamber having therein an energy-generating element that generates energy for ejecting the ink, and an ejection port portion configured to communicate between the ejection port and the pressure chamber and further includes a common liquid chamber configured to supply the ink to the pressure chamber, a common supply channel communicating with the common liquid chamber and configured to supply the ink to the common liquid chamber, and a common collecting channel communicating with the common liquid chamber and configured to collect the ink from the common liquid chamber. Specifically, the ink circulates through a circulation path including the common supply channel, the common liquid chamber, and the common

collecting channel. The level at which the effects of the present invention are obtained is lower than that in the pressure chamber circulation system described above. However, the ejection stability effect of the ink is obtained at a high level compared with the case where no circulation is performed.

Ink-jet recording method

An ink-jet recording method according to the present invention is a method for recording an image on a recording medium by ejecting an ink described later from an ink-jet type recording head.

The recording medium is not particularly limited, and a transparent or color recording medium can be used. Alternatively, the recording medium may be a slightly absorbent medium (non-absorbent medium), such as a resin film, having low absorbency for a liquid medium. Multipass recording may be used in which the ink is applied to a unit region of the recording medium in a plurality of relative scans of the recording head and the recording medium. In particular, application of a white ink and application of a color ink to a unit region may be individually performed by different relative scans. This increases the time elapsed until the inks come into contact with each other, and mixing is likely to be suppressed. Such a unit region can be defined as any region such as a single pixel or a single band.

(1) Liquid ejecting apparatus

With regard to a liquid ejecting apparatus that can be used in the ink-jet recording method according to the present invention, one or more embodiments of the present disclosure will be described in detail below with reference to the accompanying drawings. The following embodiment(s) do not limit the scope of the present disclosure. Not all the combinations of features described in the embodiments are essential to implementing the present disclosure. The same components are denoted by the same reference numerals. The embodiment(s) will be described using an example employing a thermal method for ejecting a liquid by generating air bubbles with an electrothermal converting element as an ejection element that ejects a liquid; however, the method is not limited thereto. The present disclosure may be applied to a liquid ejecting head that employs an ejection method for ejecting a liquid using a piezoelectric (piezo) element or another ejection method. The ink-jet recording head to which the present disclosure is applicable may be either a "page-wide head" that includes recording elements disposed across the printing width and that performs a printing operation without scanning an ink-jet recording head or a "serial head" that performs a printing operation by ejecting an ink while scanning the head. In particular, such a serial head can be produced at a relatively low cost, and therefore, is used in many liquid ejecting apparatuses. Accordingly, by employing the ink circulation inside a serial head, a white ink in the present invention can be used even in a low-priced liquid ejecting apparatus. That is, a system having high robustness of ink properties can be constructed. Furthermore, the configurations of the pump, pressure adjusting unit, and the like described below are also not limited to the configurations described in the embodiments and the drawings. In the following description, first, the basic configurations of the present disclosure will be described, and subsequently, features of the present disclosure will be described.

Liquid ejecting apparatus

Figs. 1A and 1B are diagrams for illustrating a liquid ejecting apparatus and illustrate a liquid ejecting head of the liquid ejecting apparatus and the periphery thereof in an enlarged view. First, the schematic configuration of a liquid ejecting apparatus 50 of this embodiment will be described with reference to Figs. 1A and 1B. Fig. 1A is a perspective view that schematically illustrates a liquid ejecting apparatus including a liquid ejecting head 1. The liquid ejecting apparatus 50 of this embodiment is a serial-type ink-jet recording apparatus that ejects an ink serving as a liquid, while scanning the liquid ejecting head 1 to perform recording on a recording medium P.

The liquid ejecting head 1 is mounted on a carriage 60. The carriage 60 moves back and forth in a main scanning direction (X-direction) along a guide shaft 51. The recording medium P is conveyed in a sub-scanning direction (Y-direction) intersecting (in this example, orthogonal to) the main scanning direction by conveying rollers 55, 56, 57, and 58. In the following drawings referred to below, the Z-direction is the vertical direction and intersects (in this example, is orthogonal to) an X-Y plane defined by the X-direction and the Y-direction. The liquid ejecting head 1 is configured to be detachably attached to the carriage 60 by the user.

The liquid ejecting head 1 includes a circulation unit 54 and an ejection unit 3 (see Fig. 2) described later. The specific configuration will be described below, and the ejection unit 3 includes a plurality of ejection ports and energy-generating elements (hereinafter referred to as ejection elements) that generate ejection energy for ejecting a liquid from the individual ejection ports.

The liquid ejecting apparatus 50 includes an ink tank 2, which is a supply source of an ink, and an external pump 21. The ink stored in the ink tank 2 is supplied to the circulation unit 54 through an ink supply tube 59 by the driving force of the external pump 21.

The liquid ejecting apparatus 50 forms a predetermined image on the recording medium P by repeating a recording scan in which the liquid ejecting head 1 mounted on the carriage 60 ejects the ink while moving in the main scanning direction and a conveying operation of conveying the recording medium P in the sub-scanning direction. The liquid ejecting head 1 of this embodiment is capable of ejecting four types of inks, namely, black (K), cyan (C), magenta (M), and yellow (Y) and can record a full-color image with the inks. The ink that the liquid ejecting head 1 can eject is not limited to the above four types of inks. The present disclosure is also applicable to liquid ejecting heads for ejecting other types of inks. That is, the types and number of inks ejected from the liquid ejecting head are not limited.

The liquid ejecting apparatus 50 includes a cap member (not illustrated) at a position apart from a conveying path of the recording medium P in the X-direction, the cap member being capable of covering an ejection port surface in which the ejection ports of the liquid ejecting head 1 are formed. The cap member covers the ejection port surface of the liquid ejecting head 1 during the non-recording operation and is used to prevent the ejection ports from drying, protect the ejection ports, and perform an ink suction operation from the ejection ports.

The liquid ejecting head 1 illustrated in Fig. 1A is an example of a liquid ejecting head 1 including four circulation units 54 for four types of inks. Alternatively, the liquid ejecting head 1 may include circulation units 54 according to the types of liquids ejected. A plurality of circulation units 54 may be provided for the same type of liquid. That is, the liquid ejecting head 1 may include one or more circulation units. Not all of four types of inks but at least one type of ink may be circulated.

Fig. 1B is a block diagram illustrating a control system of the liquid ejecting apparatus 50. A central processing unit (CPU) 103 functions as a controller that controls the operation of the components of the liquid ejecting apparatus 50 on the basis of programs, such as a processing procedure, stored in a read-only memory (ROM) 101. A random-access memory (RAM) 102 is used as, for example, a work area used when the CPU 103 executes processes. The CPU 103 receives image data from a host apparatus 400 outside the liquid ejecting apparatus 50 and controls a head driver 1A to control the driving of the ejection elements provided in the ejection unit 3. The CPU 103 also controls drivers of various actuators provided in the liquid ejecting apparatus 50. For example, the CPU 103 controls a motor driver 105A for a carriage motor 105 for moving the carriage 60 and a motor driver 104A for a conveying motor 104 for conveying the recording medium P. Furthermore, the CPU 103 controls, for example, a pump driver 500A for driving a circulation pump 500 described later and a pump driver 21A for the external pump 21. Fig. 1B illustrates a configuration for performing a process of receiving image data from the host apparatus 400. Alternatively, a process may be performed in the liquid ejecting apparatus 50 without relying on data from the host apparatus 400.

Basic configuration of liquid ejecting head

Fig. 2 is an exploded perspective view of the liquid ejecting head 1 of this embodiment. Fig. 3A is a sectional view, taken along line IIIA-IIIA in Fig. 2, illustrating the liquid ejecting head 1. Fig. 3A is an overall longitudinal sectional view of the liquid ejecting head 1. Fig. 3B is an enlarged view of an ejection module illustrated in Fig. 3A. The basic configuration of the liquid ejecting head 1 of this embodiment will be described below mainly with reference to Fig. 2 and Figs. 3A and 3B, as well as Fig. 1A as appropriate.

As illustrated in Fig. 2, the liquid ejecting head 1 includes the circulation unit 54 and the ejection unit 3 that ejects the ink supplied from the circulation unit 54 onto the recording medium P. The liquid ejecting head 1 of this embodiment is fixed and supported by the carriage 60 with a positioning unit and an electrical contact (not illustrated) provided on the carriage 60 of the liquid ejecting apparatus 50. The liquid ejecting head 1 ejects an ink while moving in the main scanning direction (X-direction) illustrated in Fig. 1A together with the carriage 60 to perform recording on the recording medium P.

The external pump 21 connected to the ink tank 2 serving as an ink supply source is provided with the ink supply tube 59 (see Fig. 1A). The ink supply tube 59 has a liquid connector (not illustrated) at a leading end thereof. When the liquid ejecting head 1 is installed in the liquid ejecting apparatus 50, the liquid connector provided at the leading end of the ink supply tube 59 is airtightly connected to a liquid-connector insertion port 53a serving as an inlet of a liquid and provided in a head casing 53 of the liquid ejecting head 1. Thus, an ink supply path extending from the ink tank 2 through the external pump 21 to the liquid ejecting head 1 is formed. Since four types of inks are used in this embodiment, four sets of the ink tank 2, the external pump 21, the ink supply tube 59, and the circulation unit 54 are provided for the individual inks, and four ink supply paths for the individual inks are independently formed. Thus, the liquid ejecting apparatus 50 of this embodiment includes an ink supply system in which an ink is supplied from the ink tank 2 disposed outside the liquid ejecting head 1. Note that the liquid ejecting apparatus 50 of this embodiment does not include an ink collecting system for collecting the ink in the liquid ejecting head 1 into the ink tank 2. Accordingly, the liquid ejecting head 1 includes the liquid-connector insertion port 53a for connecting the ink supply tube 59 of the ink tank 2 but does not include a connector insertion port for connecting a tube for collecting the ink in the liquid ejecting head 1 into the ink tank 2. The liquid-connector insertion port 53a is provided for each ink.

In Fig. 3A, a black-ink circulation unit 54B, a cyan-ink circulation unit 54C, a magenta-ink circulation unit 54M,

and a yellow-ink circulation unit 54Y are provided. The circulation units 54B, 54C, 54M, and 54Y have substantially the same configuration. The circulation units 54B, 54C, 54M, and 54Y are all referred to as a "circulation unit 54" in this embodiment when no particular distinction is made therebetween.

In Figs. 2 and 3A, the ejection unit 3 includes two ejection modules 300, a first supporting member 4, a second supporting member 7, an electrical wiring member (electrical wiring tape) 5, and an electrical contact substrate 6. As illustrated in Fig. 3B, each of the ejection modules 300 includes a silicon substrate 310 with a thickness of 0.5 to 1 mm and a plurality of ejection elements 15 provided on one surface of the silicon substrate 310. The ejection elements 15 in this embodiment are electrothermal conversion elements (heaters) that generate thermal energy as ejection energy for ejecting a liquid. Each of the ejection elements 15 is supplied with electrical power through an electrical wiring line formed on the silicon substrate 310 using a film deposition technique.

An ejection-port forming member 320 is provided on a front surface (the lower surface in Fig. 3B) of the silicon substrate 310. The ejection-port forming member 320 includes a plurality of pressure chambers 12 corresponding to the plurality of ejection elements 15 and a plurality of ejection ports 13 through which the ink is ejected, the pressure chambers 12 and the ejection ports 13 being formed by photolithography. The silicon substrate 310 further includes common supply channels 18 and common collecting channels 19. The silicon substrate 310 further includes supply connecting channels 323 each communicating between the common supply channel 18 and the pressure chamber 12 and collection connecting channels 324 each communicating between the common collecting channel 19 and the pressure chamber 12. In this embodiment, one ejection module 300 ejects two types of inks. That is, of the two ejection modules 300 illustrated in Fig. 3A, the ejection module 300 at the left in the drawing ejects a black ink and a cyan ink, and the ejection module 300 at the right in the drawing ejects a magenta ink and a yellow ink. This combination is merely one example, and any other combination of inks may be employed. One ejection module may eject one type of ink or three or more types of inks. The two ejection modules 300 do not have to eject the same number of types of inks. One ejection module 300 may be provided, or three or more ejection modules 300 may be provided. In the example illustrated in Figs. 3A and 3B, two ejection port arrays extending in the Y-direction are provided for one color ink. The pressure chamber 12, the common supply channel 18, and the common collecting channel 19 are provided for each of the plurality of ejection ports 13 constituting each ejection port array.

The silicon substrate 310 has an ink supply port and an ink collecting port, which will be described later, on a back surface (the upper surface in Fig. 3B) thereof. The ink supply port is used to supply an ink to the plurality of common supply channels 18 from an ink supply channel 48. The ink collecting port is used to collect the ink from the plurality of common collecting channels 19 to an ink collecting channel 49.

Herein, the ink supply port and the ink collecting port refer to openings used for supplying and collecting an ink during ink circulation in the forward direction described later. Specifically, during ink circulation in the forward direction, the ink is supplied from the ink supply port to the common supply channels 18 and is collected from the common collecting channels 19 to the ink collecting port. Ink circulation in which the ink is caused to flow in the backward direction may also be performed. In this case, the ink is supplied from the ink collecting port described above to the common collecting channels 19 and is collected from the common supply channels 18 to the ink supply port.

As illustrated in Fig. 3A, the back surface (the upper surface in Fig. 3A) of the ejection module 300 is bonded and fixed to one surface (the lower surface in Fig. 3A) of the first supporting member 4.

The first supporting member 4 has the ink supply channel 48 and the ink collecting channel 49 penetrating from one surface to the other surface thereof. One opening of the ink supply channel 48 communicates with the above-described ink supply port of the silicon substrate 310, and one opening of the ink collecting channel 49 communicates with the above-described ink collecting port of the silicon substrate 310. The ink supply channel 48 and the ink collecting channel 49 are provided independently for each type of ink.

The second supporting member 7 having openings 7a (see Fig. 2) through which the ejection modules 300 are passed is bonded and fixed to one surface (the lower surface in Fig. 3A) of the first supporting member 4.

The second supporting member 7 holds the electrical wiring member 5 that is electrically connected to each of the ejection modules 300. The electrical wiring member 5 is a member for applying an electrical signal for ejecting an ink to the ejection modules 300. Electrical connection portions between each of the ejection modules 300 and the electrical wiring member 5 are sealed with a sealing material (not illustrated), thereby being protected from corrosion by the ink and external impacts.

The electrical contact substrate 6 is thermocompression-bonded to an end portion 5a (see Fig. 2) of the electrical wiring member 5 using an anisotropically conductive film (not illustrated), so that the electrical wiring member 5 and the electrical contact substrate 6 are electrically connected together. The electrical contact substrate 6 has an external-signal input terminal (not illustrated) for receiving an electrical signal from the liquid ejecting apparatus 50.

Furthermore, a joint member 8 (Fig. 3A) is disposed between the first supporting member 4 and the circulation unit 54. The joint member 8 has a supply port 88 and a collection port 89 for each type of ink. The supply port 88 and the collection port 89 communicate between the ink supply channel 48 and ink collecting channel 49 of the first supporting member 4 and the channels formed in the circulation unit 54. In Fig. 3A, the supply port 88B and the collection port 89B

are provided for the black ink, and the supply port 88C and the collection port 89C are provided for the cyan ink. The supply port 88M and the collection port 89M are provided for the magenta ink, and the supply port 88Y and the collection port 89Y are provided for the yellow ink.

The opening at one end of each of the ink supply channel 48 and the ink collecting channel 49 of the first supporting member 4 has a small opening area fitted to the ink supply port and the ink collecting port of the silicon substrate 310, respectively. In contrast, the opening at the other end of each of the ink supply channel 48 and the ink collecting channel 49 of the first supporting member 4 has an enlarged shape with the same area as the large opening area of the joint member 8 formed so as to be fitted to the channel in the circulation unit 54. This configuration can reduce an increase in channel resistance to the ink collected through the collecting channels. However, the shapes of the openings at one end and the other end of the ink supply channel 48 and the ink collecting channel 49 are not limited to the above examples.

In the liquid ejecting head 1 having the above configuration, the ink supplied to the circulation unit 54 passes through the supply port 88 of the joint member 8 and the ink supply channel 48 of the first supporting member 4 and flows into the common supply channel 18 through the ink supply port of the ejection module 300. Subsequently, the ink flows from the common supply channel 18 into the pressure chamber 12 through the supply connecting channel 323, and part of the ink flowing into the pressure chamber 12 is ejected from the ejection port 13 by the driving of the ejection element 15. Remaining ink that has not been ejected passes through the pressure chamber 12, the collection connecting channel 324, and the common collecting channel 19 and flows into the ink collecting channel 49 of the first supporting member 4 through the ink collecting port. The ink flowing into the ink collecting channel 49 flows into the circulation unit 54 through the collection port 89 of the joint member 8 and thus is collected.

In this case, an end portion of the common collecting channel 19 preferably extends to the outside of an ejection port present on the endmost portion of the ejection port array with respect to the direction in which the ejection ports are arrayed, and an end portion of the collection port 89 is preferably provided on the outside of the endmost portion of the ejection port array at a position at which the common collecting channel 19 does not have a dead end. Similarly, an end portion of the common supply channel 18 may extend to the outside of the end portion of the ejection port array, or a supply port disposed outside the ejection port array may be present. That is, an end portion of at least one selected from the common supply channel and the common collecting channel preferably extends to the outside of the end portion of the ejection port array. Furthermore, at least one or more of the supply port and the collection port is preferably provided outside the ejection port array.

The common supply channel 18 and the common collecting channel 19 are separately provided for each ink, and the number of the common supply channels 18 arranged and the number of the common collecting channels 19 arranged are determined depending on the number of ejection port arrays for each color. In addition, the supply ports 88 and the collection ports 89 are arranged such that the number of each of the supply ports 88 and the collection ports 89 corresponds to the number of ejection ports of the ejection port array. A region in the common channel furthest from the collection port and a region furthest from the supply port are also located at positions at which an ink is supplied from two collection ports and two supply ports, and neither the common supply channel 18 nor the common collecting channel 19 has a dead end. Accordingly, it is possible to expect the effect of preventing sticking in a common channel, which is likely to occur particularly when a highly viscous ink is used.

## Components of circulation unit

Fig. 4 is a schematic external view of one circulation unit 54 for one type of ink applied to the recording apparatus of this embodiment. The circulation unit 54 may include a filter 110, a first pressure adjusting unit 120, and a second pressure adjusting unit 150 in addition to a circulation pump 500. These components are connected with channels as illustrated in Figs. 5 and 6 to constitute a circulation path for supplying and collecting an ink to and from the ejection module 300 in the liquid ejecting head 1.

## Circulation path in liquid ejecting head

Fig. 5 is a longitudinal sectional view that schematically illustrates a circulation path of one type of ink (one-color ink) formed in the liquid ejecting head 1. To describe the circulation path more clearly, relative positions of the configurations (the first pressure adjusting unit 120, the second pressure adjusting unit 150, the circulation pump 500, etc.) in Fig. 5 are simplified. Therefore, relative positions of the configurations are different from those of the configurations in Fig. 19 described later. Fig. 6 is a schematic block diagram of the circulation path illustrated in Fig. 5. As illustrated in Figs. 5 and 6, the first pressure adjusting unit 120 includes a first valve chamber 121 and a first pressure control chamber 122. The second pressure adjusting unit 150 includes a second valve chamber 151 and a second pressure control chamber 152. The first pressure adjusting unit 120 is configured to have a control pressure higher than that of the second pressure adjusting unit 150. In this embodiment, circulation in a certain pressure range in the circulation path

is realized by using the two pressure adjusting units 120 and 150.

The liquid ejecting head 1 is configured so that an ink flows through the pressure chamber 12 (ejection element 15) at a flow rate according to the pressure difference between the first pressure adjusting unit 120 and the second pressure adjusting unit 150. The circulation path in the liquid ejecting head 1 and the flow of the ink in the circulation path will be described below with reference to Figs. 5 and 6. The arrows in the drawings indicate directions in which the ink flows.

First, the connection state of the components in the liquid ejecting head 1 will be described.

The external pump 21 that pumps the ink contained in the ink tank 2 (Fig. 6) disposed outside the liquid ejecting head 1 to the liquid ejecting head 1 is connected to the circulation unit 54 with the ink supply tube 59 (Fig. 1) therebetween. The filter 110 is provided in the ink channel (inflow channel) located upstream of the circulation unit 54. The ink supply path (inflow channel) located downstream of the filter 110 is connected to the first valve chamber 121 of the first pressure adjusting unit 120. The first valve chamber 121 communicates with the first pressure control chamber 122 via a communication port 191A which can be opened and closed by a valve 190A illustrated in Fig. 5. The inflow channel is a channel flowing into the liquid ejecting head 1 for supplying the liquid in the ink tank 2 disposed outside the liquid ejecting head 1 to the pressure chamber 12.

The first pressure control chamber 122 is connected to a supply channel 130, a bypass channel 160, and a pump outlet channel 180 of the circulation pump 500. The supply channel 130 is connected to the common supply channel 18 via the above-described ink supply port provided in the ejection module 300. The bypass channel 160 is connected to the second valve chamber 151 provided in the second pressure adjusting unit 150. The second valve chamber 151 communicates with the second pressure control chamber 152 via a communication port 191B which is opened and closed by a valve 190B illustrated in Fig. 5. Figs. 5 and 6 illustrates an example in which one end of the bypass channel 160 is connected to the first pressure control chamber 122 of the first pressure adjusting unit 120, and the other end of the bypass channel 160 is connected to the second valve chamber 151 of the second pressure adjusting unit 150. Alternatively, one end of the bypass channel 160 may be connected to the supply channel 130, and the other end of the bypass channel 160 may be connected to the second valve chamber 151.

The second pressure control chamber 152 is connected to a collecting channel 140. The collecting channel 140 is connected to the common collecting channel 19 via the above-described ink collecting port provided in the ejection module 300. The second pressure control chamber 152 is connected to the circulation pump 500 via a pump inlet channel 170. In Fig. 5, the pump inlet channel 170 has an inlet port 170a.

Next, the flow of an ink in the liquid ejecting head 1 having the above configuration will be described. As illustrated in Fig. 6, the ink contained in the ink tank 2 is pressurized by the external pump 21 provided for the liquid ejecting apparatus 50 to form a positive-pressure ink flow and is supplied to the circulation unit 54 of the liquid ejecting head 1.

The ink supplied to the circulation unit 54 passes through the filter 110, so that foreign substances such as dust and air bubbles are removed and then flows into the first valve chamber 121 in the first pressure adjusting unit 120. The pressure of the ink decreases because of a pressure loss when the ink passes through the filter 110; however, the pressure of the ink is positive at this stage. The ink flowing into the first valve chamber 121 subsequently passes through the communication port 191A, when the valve 190A is opened, and flows into the first pressure control chamber 122. The ink that flows into the first pressure control chamber 122 is switched from the positive pressure to a negative pressure because of a pressure loss when passing through the communication port 191A.

Next, the flow of the ink in the circulation path will be described. The circulation pump 500 operates so as to send the ink suctioned from the upstream pump inlet channel 170 to the downstream pump outlet channel 180. The driving of the pump causes the ink supplied to the first pressure control chamber 122 to flow into the supply channel 130 and the bypass channel 160 together with the ink sent from the pump outlet channel 180. In this embodiment, a piezoelectric diaphragm pump including, as a drive source, a piezoelectric element attached to a diaphragm is used as the circulation pump capable of sending a liquid, the details of which will be described later. The piezoelectric diaphragm pump is a pump in which the volume in a pump chamber is changed by inputting a driving voltage to the piezoelectric element and which pumps a liquid by causing two check valves to alternately move due to pressure changes.

The ink flowing into the supply channel 130 flows through the ink supply port of the ejection module 300 and the common supply channel 18 into the pressure chamber 12, and part of the ink is ejected from the ejection port 13 by the driving (heat generation) of the ejection element 15. The remaining ink that has not been used for ejection flows through the pressure chamber 12, passes through the common collecting channel 19, and then flows into the collecting channel 140 connected to the ejection module 300. The ink flowing into the collecting channel 140 flows into the second pressure control chamber 152 of the second pressure adjusting unit 150.

On the other hand, the ink flowing from the first pressure control chamber 122 into the bypass channel 160 flows into the second valve chamber 151, then passes through the communication port 191B, and flows into the second pressure control chamber 152. The ink flowing into the second pressure control chamber 152 through the bypass channel 160 and the ink collected from the collecting channel 140 are suctioned into the circulation pump 500 through the pump

inlet channel 170 by the driving of the circulation pump 500. The ink suctioned into the circulation pump 500 is sent to the pump outlet channel 180 and flows into the first pressure control chamber 122 again. In the following, the ink flowing into the second pressure control chamber 152 from the first pressure control chamber 122 through the supply channel 130 and the ejection module 300 and the ink flowing into the second pressure control chamber 152 through the bypass channel 160 flow into the circulation pump 500. The ink is sent from the circulation pump 500 to the first pressure control chamber 122. Thus, the ink is circulated in the circulation path.

As described above, in this embodiment, the circulation pump 500 enables a liquid to be circulated along the circulation path formed in the liquid ejecting head 1. This makes it possible to reduce thickening of an ink and deposition of precipitated components of the coloring materials of the ink in the ejection module 300 and thus to keep the ink fluidity and ejection characteristics at the ejection port in the ejection module 300 in good condition.

Since the circulation path in this embodiment is completed in the liquid ejecting head 1, the circulation path length can be remarkably reduced compared with the case where an ink is circulated between the liquid ejecting head 1 and the ink tank 2 disposed outside the liquid ejecting head 1. Accordingly, circulation of the ink can be performed with a compact circulation pump.

Moreover, the channel connecting the liquid ejecting head 1 and the ink tank 2 together is only a channel for supplying an ink. That is, a channel for collecting the ink from the liquid ejecting head 1 to the ink tank 2 is not necessary. Accordingly, it is sufficient that only a tube for supplying an ink is provided to connect the ink tank 2 to the liquid ejecting head 1, and a tube for collecting the ink need not be provided. This enables the interior of the liquid ejecting apparatus 50 to be simple with reduced number of tubes, thereby realizing the reduction in the size of the entire apparatus. The reduction of the number of tubes enables a reduction of pressure fluctuations of the ink due to swinging of the tubes with the main scanning of the liquid ejecting head 1. The swinging of the tubes during the main scanning of the liquid ejecting head 1 acts as a driving load on the carriage motor that drives the carriage 60. The reduction of the number of tubes enables a reduction of the driving load on the carriage motor and a simplification of the main scanning mechanism including, for example, the carriage motor. Furthermore, it is not necessary to collect the ink from the liquid ejecting head to the ink tank, and thus the size of the external pump 21 can also be reduced. Thus, according to this embodiment, the size and cost of the liquid ejecting apparatus 50 can be reduced.

Pressure adjusting unit

Figs. 7A to 7C are views illustrating an example of the pressure adjusting unit. The configuration and operation of the pressure adjusting units (the first pressure adjusting unit 120 and the second pressure adjusting unit 150) housed in the above-described liquid ejecting head 1 will be described in more detail with reference to Figs. 7A to 7C. The first pressure adjusting unit 120 and the second pressure adjusting unit 150 have substantially the same configuration. Therefore, the first pressure adjusting unit 120 will be described as an example, and for the second pressure adjusting unit 150, reference signs of components corresponding to those of the first pressure adjusting unit 120 will be written side by side in Figs. 7A to 7C. In the case of the second pressure adjusting unit 150, the first valve chamber 121 described below is read as the second valve chamber 151, and the first pressure control chamber 122 is read as the second pressure control chamber 152.

The first pressure adjusting unit 120 includes the first valve chamber 121 and the first pressure control chamber 122 that are formed in a cylindrical casing 125. The first valve chamber 121 and the first pressure control chamber 122 are separated from each other by a partition 123 provided in the cylindrical casing 125. However, the first valve chamber 121 communicates with the first pressure control chamber 122 via a communication port 191 formed in the partition 123. The first valve chamber 121 is provided with a valve 190 that switches between communication and disconnection between the first valve chamber 121 and the first pressure control chamber 122 at the communication port 191. The valve 190 is held at a position facing the communication port 191 by a valve spring 200 and can be brought into close contact with the partition 123 by the urging force of the valve spring 200. When the valve 190 comes in close contact with the partition 123, the flow of the ink at the communication port 191 is blocked. To enhance the closeness to the partition 123, the portion of the valve 190 to come into contact with the partition 123 may be formed of an elastic member. A valve shaft 190a is disposed at the center of the valve 190 so as to pass through the communication port 191. Pressing the valve shaft 190a against the urging force of the valve spring 200 separates the valve 190 from the partition 123 to thereby enable the ink to flow through the communication port 191. Hereinafter, a state in which the flow of the ink is blocked at the communication port 191 by the valve 190 is referred to as a "closed state", and a state in which the ink can flow through the communication port 191 is referred to as an "open state".

The opening of the cylindrical casing 125 is closed by a flexible member 230 and a pressure plate 210. The flexible member 230, the pressure plate 210, the peripheral wall of the casing 125, and the partition 123 form the first pressure control chamber 122. The pressure plate 210 is displaceable with the displacement of the flexible member 230. The pressure plate 210 and the flexible member 230 may be formed of any material. For example, the pressure plate 210 may be formed of a resin molded part, and the flexible member 230 may be formed of a resin film. In this case,

the pressure plate 210 can be fixed to the flexible member 230 by thermal welding.

A pressure adjusting spring 220 (an urging member) is disposed between the pressure plate 210 and the partition 123. The urging force of the pressure adjusting spring 220 urges the pressure plate 210 and the flexible member 230 in the direction in which the inner volume of the first pressure control chamber 122 increases, as illustrated in Fig. 7A.

When the pressure in the first pressure control chamber 122 decreases, the pressure plate 210 and the flexible member 230 are displaced in the direction in which the inner volume of the first pressure control chamber 122 decreases against the pressure of the pressure adjusting spring 220. When the inner volume of the first pressure control chamber 122 decreases to a certain amount, the pressure plate 210 comes into contact with the valve shaft 190a of the valve 190. Subsequently, when the inner volume of the first pressure control chamber 122 further decreases, the valve 190 moves together with the valve shaft 190a against the urging force of the valve spring 200 to separate from the partition 123. As a result, the communication port 191 is in the open state (the state in Fig. 7B).

In this embodiment, the connection in the circulation path is set such that the pressure in the first valve chamber 121 when the communication port 191 is in the open state is higher than the pressure in the first pressure control chamber 122.

Accordingly, when the communication port 191 is in the open state, the ink flows from the first valve chamber 121 into the first pressure control chamber 122. The ink flow causes the flexible member 230 and the pressure plate 210 to be displaced in the direction in which the inner volume of the first pressure control chamber 122 increases. As a result, the pressure plate 210 separates from the valve shaft 190a of the valve 190, and the valve 190 is brought into close contact with the partition 123 by the urging force of the valve spring 200, and consequently, the communication port 191 is in the closed state (the state in Fig. 7C).

Thus, in the first pressure adjusting unit 120 of this embodiment, when the pressure in the first pressure control chamber 122 decreases to a certain pressure or less (for example, a negative pressure increases), the ink flows from the first valve chamber 121 into the first pressure control chamber 122 through the communication port 191. Thus, the first pressure adjusting unit 120 is configured so that the pressure in the first pressure control chamber 122 does not decrease any more. Accordingly, the pressure in the first pressure control chamber 122 is controlled within a certain range.

Next, the pressure in the first pressure control chamber 122 will be described in more detail.

Assume that the flexible member 230 and the pressure plate 210 are displaced according to the pressure in the first pressure control chamber 122 to bring the pressure plate 210 into contact with the valve shaft 190a, thereby allowing the communication port 191 to be in the open state (the state in Fig. 7B), as described above. The relationship between the forces acting on the pressure plate 210 at this time is expressed by Equation 1 below.

$$P2 \times S2 + F2 + (P1 - P2) \times S1 + F1 = 0 \cdots \text{Equation 1}$$

When Equation 1 is rearranged for P2, P2 is expressed as follows.

$$P2 = -(F1 + F2 + P1 \times S1)/(S2 - S1) \cdots \text{Equation 2}$$

P1: Pressure (gauge pressure) in first valve chamber 121
P2: Pressure (gauge pressure) in first pressure control chamber 122
F 1: Spring force of valve spring 200
F2: Spring force of pressure adjusting spring 220
S 1: Pressure receiving area of valve 190
S2: Pressure receiving area of pressure plate 210

Here, the spring force F1 of the valve spring 200 and the spring force F2 of the pressure adjusting spring 220 are positive in the direction of pressing the valve 190 and the pressure plate 210 (to the left in Figs. 7A to 7C). The pressure P1 of the first valve chamber 121 and the pressure P2 of the first pressure control chamber 122 are set such that P1 satisfies the relation $P1 \geq P2$.

The pressure P2 in the first pressure control chamber 122 when the communication port 191 is in the open state is determined by Equation 2. When the communication port 191 is in the open state, the ink flows from the first valve chamber 121 into the first pressure control chamber 122 because of the relation of $P 1 \geq P2$. As a result, the pressure P2 in the first pressure control chamber 122 does not decrease any more, and P2 is kept at a pressure within a certain range.

On the other hand, the relation between the forces acting on the pressure plate 210 when the pressure plate 210 comes out of contact with the valve shaft 190a to allow the communication port 191 to be in the closed state, as illustrated in Fig. 7C, is expressed as Equation 3.

$$P3 \times S3 + F3 = 0 \cdots \text{Equation 3}$$

When Equation 3 is rearranged for P3, P3 is expressed as follows.

$$P3 = -F3/S3 \cdots \text{Equation 4}$$

F3: Spring force of pressure adjusting spring 220 when pressure plate 210 and valve shaft 190a are out of contact with each other
P3: Pressure (gauge pressure) of first pressure control chamber 122 when pressure plate 210 and valve shaft 190a are out of contact with each other
S3: Pressure receiving area of pressure plate 210 when pressure plate 210 and valve shaft 190a are out of contact with each other

Fig. 7C illustrates a state in which the pressure plate 210 and the flexible member 230 are displaced to the left in the drawing to a displaceable limit. The pressure P3 in the first pressure control chamber 122, the spring force F3 of the pressure adjusting spring 220, and the pressure receiving area S3 of the pressure plate 210 change according to the amount of displacement while the pressure plate 210 and the flexible member 230 are displaced to the state illustrated in Fig. 7C. Specifically, when the pressure plate 210 and the flexible member 230 are closer to the right in Fig. 7B than in Fig. 7C, the pressure receiving area S3 of the pressure plate 210 decreases, and the spring force F3 of the pressure adjusting spring 220 increases. As a result, the pressure P3 in the first pressure control chamber 122 decreases because of the relation of Equation 4. Accordingly, the pressure in the first pressure control chamber 122 increases gradually (that is, the negative pressure decreases and is close to a positive pressure) during the period from the state in Fig. 7B to the state in Fig. 7C because of the relations of Equation 2 and Equation 4. That is, the pressure plate 210 and the flexible member 230 are gradually displaced to the left from the state in which the communication port 191 is in the open state, and the pressure in the first pressure control chamber 122 increases gradually until the inner volume of the first pressure control chamber 122 reaches a displaceable limit finally. That is, the negative pressure decreases.

Circulation pump

Next, the configuration and operation of the circulation pump 500 housed in the above-described liquid ejecting head 1 will be described in detail with reference to Figs. 8A and 8B and Fig. 9.

Figs. 8A and 8B are external perspective views of the circulation pump 500. Fig. 8A is an external perspective view illustrating the front side of the circulation pump 500, and Fig. 8B is an external perspective view illustrating the back side of the circulation pump 500.

The outer shell of the circulation pump 500 is constituted by a pump casing 505 and a cover 507 fixed to the pump casing 505. The pump casing 505 is constituted by a casing body 505a and a channel connecting member 505b fixed to the outer surface of the casing body 505a by bonding. The casing body 505a and the channel connecting member 505b have pairs of through-holes communicating with each other at two different positions. One of the pairs of through-holes provided at one position form a pump supply hole 501, and the other pair of through-holes provided at the other position form a pump discharge hole 502. The pump supply hole 501 is connected to the pump inlet channel 170 connected to the second pressure control chamber 152, and the pump discharge hole 502 is connected to the pump outlet channel 180 connected to the first pressure control chamber 122. An ink supplied from the pump supply hole 501 passes through a pump chamber 503 (see Fig. 9) described later and is discharged from the pump discharge hole 502.

Fig. 9 is a sectional view, taken along line IX-IX in Fig. 8A, illustrating the circulation pump 500. A diaphragm 506 is bonded to the inner surface of the pump casing 505, and the pump chamber 503 is formed between the diaphragm 506 and a recess formed in the inner surface of the pump casing 505. The pump chamber 503 communicates with the pump supply hole 501 and the pump discharge hole 502 that are formed in the pump casing 505. A check valve 504a is provided in an intermediate portion of the pump supply hole 501, and a check valve 504b is provided in an intermediate portion of the pump discharge hole 502. Specifically, the check valve 504a is disposed such that a portion thereof can move to the left in the drawing in a space 512a formed in the intermediate portion of the pump supply hole 501. The check valve 504b is disposed such that a portion thereof can move to the right in the drawing in a space 512b formed in the intermediate portion of the pump discharge hole 502.

When the diaphragm 506 is displaced to increase the volume of the pump chamber 503, and the pump chamber 503 is thereby depressurized, the check valve 504a is separated from the opening of the pump supply hole 501 in the space 512a (that is, moves to the left in the drawing). The separation of the check valve 504a from the opening of the pump supply hole 501 in the space 512a results in the open state in which the ink is allowed to flow through the pump

supply hole 501. When the diaphragm 506 is displaced to decrease the volume of the pump chamber 503, and the pump chamber 503 is thereby pressurized, the check valve 504a comes into close contact with the peripheral wall of the opening of the pump supply hole 501. This results in the closed state in which the flow of the ink in the pump supply hole 501 is blocked.

In contrast, when the pump chamber 503 is depressurized, the check valve 504b comes into close contact with the peripheral wall of the opening of the pump casing 505, resulting in the closed state in which the flow of the ink in the pump discharge hole 502 is blocked. When the pump chamber 503 is pressurized, the check valve 504b is separated from the opening of the pump casing 505 to move toward the space 512b (that is, moves to the right in the drawing), thereby allowing the ink to flow through the pump discharge hole 502.

The check valves 504a and 504b may be formed of any material that is deformable in response to the pressure in the pump chamber 503, and may each be formed of, for example, an elastic member made of ethylene-propylene-diene rubber (EPDM) or an elastomer, or a film or thin sheet made of polypropylene or the like. However, the material of the check valves 504a and 504b is not limited thereto.

The pump chamber 503 is formed by bonding the pump casing 505 and the diaphragm 506, as described above. Accordingly, the pressure in the pump chamber 503 is changed by deformation of the diaphragm 506. For example, when the diaphragm 506 is displaced toward the pump casing 505 (displaced to the right in the drawing) to decrease the volume of the pump chamber 503, the pressure in the pump chamber 503 increases. This causes the check valve 504b disposed to face the pump discharge hole 502 to be opened, thereby discharging the ink in the pump chamber 503. At this time, the check valve 504a disposed to face the pump supply hole 501 comes into close contact with the peripheral wall of the pump supply hole 501, thereby preventing the ink from flowing from the pump chamber 503 back to the pump supply hole 501.

In contrast, when the diaphragm 506 is displaced in a direction in which the pump chamber 503 expands, the pressure in the pump chamber 503 decreases. This causes the check valve 504a disposed to face the pump supply hole 501 to be opened, thereby supplying the ink to the pump chamber 503. At this time, the check valve 504b disposed at the pump discharge hole 502 comes into close contact with the peripheral wall of the opening formed in the pump casing 505 to close the opening. This prevents the ink from flowing from the pump discharge hole 502 back to the pump chamber 503.

Thus, the circulation pump 500 suctions and discharges the ink by deforming the diaphragm 506 to change the pressure in the pump chamber 503. In this case, even if the diaphragm 506 is displaced, entering of bubbles in the pump chamber 503 decreases the pressure change in the pump chamber 503 due to expansion and contraction of the bubbles, and the amount of liquid sent decreases. In view of this, the pump chamber 503 is disposed so as to be parallel to the gravity to facilitate gathering of the bubbles in the pump chamber 503 to an upper part of the pump chamber 503, and the pump discharge hole 502 is disposed above the center of the pump chamber 503. This enables an improvement in discharging properties of bubbles in the pump and stabilization of the flow rate.

## Flow of ink in liquid ejecting head

Figs. 10A to 10E are diagrams illustrating the flow of an ink in a liquid ejecting head. The circulation of the ink in the liquid ejecting head 1 will be described with reference to Figs. 10A to 10E. To describe an ink circulation path more clearly, relative positions of the configurations (the first pressure adjusting unit 120, the second pressure adjusting unit 150, the circulation pump 500, etc.) in Figs. 10A to 10E are simplified. Therefore, relative positions of the configurations are different from those of the configurations of Fig. 19 described later. Fig. 10A schematically illustrates the flow of the ink in a recording operation for performing recording by ejecting the ink from the ejection port 13. The arrows in the drawings indicate the flow of the ink. In this embodiment, both the external pump 21 and the circulation pump 500 start driving in the recording operation. The external pump 21 and the circulation pump 500 may be driven regardless of the recoding operation. The external pump 21 and the circulation pump 500 do not have to be driven together, and may be driven independently.

During the recording operation, the circulation pump 500 is in the ON state (driven state) in which the ink flowing out of the first pressure control chamber 122 flows into the supply channel 130 and the bypass channel 160. The ink flowing into the supply channel 130 passes through the ejection module 300, then flows into the collecting channel 140, and is then supplied to the second pressure control chamber 152.

On the other hand, the ink flowing from the first pressure control chamber 122 into the bypass channel 160 passes through the second valve chamber 151 and flows into the second pressure control chamber 152. The ink flowing into the second pressure control chamber 152 passes through the pump inlet channel 170, the circulation pump 500, and the pump outlet channel 180 and then flows into the first pressure control chamber 122 again. At this time, the control pressure of the first valve chamber 121 is set to be higher than the control pressure of the first pressure control chamber 122 on the basis of the relation of Equation 2 described above. Accordingly, the ink in the first pressure control chamber 122 is supplied to the ejection module 300 again through the supply channel 130 without flowing into the first

valve chamber 121. The ink flowing into the ejection module 300 passes through the collecting channel 140, the second pressure control chamber 152, the pump inlet channel 170, the circulation pump 500, and the pump outlet channel 180 and flows into the first pressure control chamber 122 again. Thus, ink circulation completed in the liquid ejecting head 1 is performed.

In the above ink circulation, the amount (flow rate) of ink circulated in the ejection module 300 is determined by the difference in control pressure between the first pressure control chamber 122 and the second pressure control chamber 152. This pressure difference is set so as to provide an amount of circulation such that the ink thickening near the ejection port 13 in the ejection module 300 can be prevented. The ink corresponding to the amount of ink consumed by recording is supplied from the ink tank 2 to the first pressure control chamber 122 through the filter 110 and the first valve chamber 121. The mechanism by which consumed ink is supplied will be described in detail. Since the ink decreases from the interior of the circulation path by an amount corresponding to the ink consumed by recording, the pressure in the first pressure control chamber 122 decreases, and as a result, the ink in the first pressure control chamber 122 also decreases. As the ink in the first pressure control chamber 122 decreases, the inner volume of the first pressure control chamber 122 decreases. The decrease in the inner volume of the first pressure control chamber 122 causes the communication port 191A to be in the open state, and the ink is supplied from the first valve chamber 121 to the first pressure control chamber 122. This supplied ink loses in pressure while passing from the first valve chamber 121 through the communication port 191A and flows into the first pressure control chamber 122. This causes the ink in the positive pressure to switch to the ink in a negative pressure state. The inflow of the ink from the first valve chamber 121 to the first pressure control chamber 122 increases the pressure in the first pressure control chamber 122 to increases the inner volume of the first pressure control chamber 122, causing the communication port 191A to be in the closed state. Thus, the communication port 191A repeats the open state and the closed state according to the consumption of the ink. If the ink is not consumed, the communication port 191A is kept in the closed state.

Fig. 10B schematically illustrates a flow of the ink immediately after the recording operation ends, and the circulation pump 500 is in the OFF state (stopped state). At the time when the recording operation ends and the circulation pump 500 is turned off, both the pressure in the first pressure control chamber 122 and the pressure in the second pressure control chamber 152 are in the controlled pressure during the recording operation. This causes the ink to move as in Fig. 10B according to the difference between the pressure in the first pressure control chamber 122 and the pressure in the second pressure control chamber 152. Specifically, a flow of the ink supplied from the first pressure control chamber 122 to the ejection module 300 through the supply channel 130 and subsequently passing through the collecting channel 140 to the second pressure control chamber 152 is continuously generated. A flow of the ink from the first pressure control chamber 122 to the second pressure control chamber 152 through the bypass channel 160 and the second valve chamber 151 is also continuously generated.

The ink in an amount corresponding to the amount of ink moved from the first pressure control chamber 122 to the second pressure control chamber 152 by the ink flows is supplied from the ink tank 2 to the first pressure control chamber 122 through the filter 110 and the first valve chamber 121. Thus, the content inside the first pressure control chamber 122 is kept constant. When the content of the first pressure control chamber 122 is constant, the spring force F1 of the valve spring 200, the spring force F2 of the pressure adjusting spring 220, the pressure receiving area S1 of the valve 190, and the pressure receiving area S2 of the pressure plate 210 are kept constant according to the relation of Equation 2 described above. Therefore, the pressure in the first pressure control chamber 122 is determined according to a change in the pressure (gauge pressure) P1 in the first valve chamber 121. Accordingly, if the pressure P1 in the first valve chamber 121 does not change, the pressure P2 in the first pressure control chamber 122 is kept at the same pressure as the control pressure during the recording operation.

On the other hand, the pressure in the second pressure control chamber 152 changes with time according to a change in the content caused by the inflow of the ink from the first pressure control chamber 122. Specifically, the pressure in the second pressure control chamber 152 changes from the state in Fig. 10B according to Equation 2 during the period until the communication port 191 is in the closed state, so that the second valve chamber 151 and the second pressure control chamber 152 are in a disconnected state, as illustrated in Fig. 10C. Subsequently, the pressure plate 210 and the valve shaft 190a are in a non-contact state to allow the communication port 191 to be in the closed state. Subsequently, the ink flows from the collecting channel 140 into the second pressure control chamber 152, as illustrated in Fig. 10D. This inflow of the ink causes the pressure plate 210 and the flexible member 230 to be displaced, and the pressure in the second pressure control chamber 152 changes, that is, increases according to Equation 4 until the inner volume of the second pressure control chamber 152 becomes maximum.

In the state in Fig. 10C, the ink flow from the first pressure control chamber 122 through the bypass channel 160 and the second valve chamber 151 to the second pressure control chamber 152 does not occur. Accordingly, only the flow of the ink in the first pressure control chamber 122 passing through the supply channel 130 to the ejection module 300 and subsequently passing through the collecting channel 140 to the second pressure control chamber 152 is generated.

The movement of the ink from the first pressure control chamber 122 to the second pressure control chamber

152 occurs according to the difference between the pressure in the first pressure control chamber 122 and the pressure in the second pressure control chamber 152, as described above.

Therefore, when the pressure in the second pressure control chamber 152 becomes equal to the pressure in the first pressure control chamber 122, the movement of the ink stops.

In the state in which the pressure in the second pressure control chamber 152 is equal to the pressure in the first pressure control chamber 122, the second pressure control chamber 152 expands to the state illustrated in Fig. 10D. When the second pressure control chamber 152 expands as illustrated in Fig. 10D, a reservoir in which the ink can be stored is formed in the second pressure control chamber 152. The time from the stop of the circulation pump 500 to the state in Fig. 10D depends on the shape and size of the channels and properties of the ink but is about 1 to 2 minutes. When the circulation pump 500 is driven from the state illustrated in Fig. 10D in which the ink is stored in the reservoir, the ink in the reservoir is supplied to the first pressure control chamber 122 by the circulation pump 500. As a result, the amount of ink in the first pressure control chamber 122 increases, and the flexible member 230 and the pressure plate 210 are displaced in the expanding direction, as illustrated in Fig. 10E. When the driving of the circulation pump 500 is continued, the state in the circulation path changes as illustrated in Fig. 10A.

Although Fig. 10A has been described as an example during a recording operation, the ink may be circulated without the recording operation, as described above. Also in this case, the flow of the ink as illustrated in Figs. 10A to 10E occurs in response to the drive and stop of the circulation pump 500.

In this embodiment, the communication port 191B of the second pressure adjusting unit 150 is in the open state when the circulation pump 500 is driven to circulate the ink, and is in the closed state when the ink circulation is stopped, as described above. However, the configuration is not limited to the above example. The control pressure may be set so that, even when the circulation pump 500 is driven to circulate the ink, the communication port 191B of the second pressure adjusting unit 150 is in the closed state. This will be specifically described below together with the role of the bypass channel 160.

The bypass channel 160 connecting the first pressure adjusting unit 120 and the second pressure adjusting unit 150 together is provided, for example, to prevent a negative pressure generated in the circulation path from affecting the ejection module 300 if the negative pressure is higher than a predetermined value. The bypass channel 160 is provided also to supply the ink to the pressure chamber 12 from both the supply channel 130 and the collecting channel 140.

First, an example in which the bypass channel 160 is provided to prevent a negative pressure higher than a predetermined value from affecting the ejection module 300 will be described. For example, the properties (for example, viscosity) of the ink may be changed by a change in ambient temperature. The change in the viscosity of the ink causes a change in the pressure loss in the circulation path. For example, a decrease in the viscosity of the ink decreases the pressure loss in the circulation path. As a result, the flow rate of the circulation pump 500 driven at a constant amount of driving increases, resulting in an increase in the flow rate of the ejection module 300. In contrast, the ejection module 300 is kept at a constant temperature by a temperature adjusting mechanism (not illustrated), and thus the viscosity of the ink in the ejection module 300 is kept constant even if the ambient temperature changes. Since the viscosity of the ink in the ejection module 300 does not change, and the flow rate of the ink flowing in the ejection module 300 increases, the negative pressure in the ejection module 300 is increased by the flow resistance. When the negative pressure in the ejection module 300 is higher than the predetermined value, the meniscus at the ejection port 13 may be broken, and the external air may be attracted into the circulation path, which may hinder normal ejection. Even if the meniscus is not broken, the negative pressure in the pressure chambers 12 is higher than the predetermined pressure, which may affect the ejection.

For this reason, the bypass channel 160 is formed in the circulation path. When the bypass channel 160 is provided and the negative pressure is higher than a predetermined value, the ink also flows through the bypass channel 160, and thus the pressure in the ejection module 300 can be kept constant. Accordingly, for example, the control pressure of the second pressure adjusting unit 150 may be set so that the communication port 191B is kept in the closed state even during operation of the circulation pump 500. The control pressure of the second pressure adjusting unit 150 may be set so that the communication port 191B of the second pressure adjusting unit 150 is in the open state when the negative pressure is higher than the predetermined value. That is, provided that the meniscus is not broken, or a predetermined negative pressure is maintained even if the flow rate of the pump is changed by a change in viscosity due to, for example, an environmental change, the communication port 191B may be in the closed state when the circulation pump 500 is driven.

Next, an example in which the bypass channel 160 is provided in order to supply an ink to the pressure chamber 12 from both the supply channel 130 and the collecting channel 140 will be described. A pressure fluctuation in the circulation path can be generated also by an ejection operation using the ejection element 15. This is because the ejection operation causes a force to attract the ink to the pressure chamber 12.

The point that an ink is supplied to the pressure chamber 12 from both the supply channel 130 and the collecting channel 140 when high-duty recording is continued will be described below. Herein, the duty is set at 100% in a state

in which a 4-pl ink droplet is recorded at one time on a grid of 1,200 dpi, although the definition of the duty depends on various conditions. High-duty recording is recording at a duty of, for example, 100%.

Continuous high-duty recording decreases the amount of ink flowing from the pressure chamber 12 into the second pressure control chamber 152 through the collecting channel 140. Meanwhile, since the circulation pump 500 allows the ink to flow at a constant amount, the inflow and outflow in the second pressure control chamber 152 are unbalanced, the ink in the second pressure control chamber 152 decreases, and the negative pressure in second pressure control chamber 152 increases to thereby contract the second pressure control chamber 152. The increase in the negative pressure in the second pressure control chamber 152 increases the amount of ink flowing into the second pressure control chamber 152 through the bypass channel 160, and the second pressure control chamber 152 is stabilized while the outflow and inflow are balanced. Thus, the negative pressure in the second pressure control chamber 152 increases in response to the duty. As described above, in the configuration in which the communication port 191B is in the closed state when the circulation pump 500 is driven, the communication port 191B turns to be in the open state according to the duty, so that the ink flows from the bypass channel 160 into the second pressure control chamber 152.

When high-duty recording is further continued, the amount of ink flowing from the pressure chamber 12 into the second pressure control chamber 152 through the collecting channel 140 decreases, and the amount of ink flowing into the second pressure control chamber 152 through the bypass channel 160 via the communication port 191B increases instead. When this state is further continued, the amount of ink flowing from the pressure chamber 12 into the second pressure control chamber 152 through the collecting channel 140 is reduced to zero, and the whole of the ink flowing to the circulation pump 500 comes from the communication port 191B. When this state is still further continued, the ink flows back from the second pressure control chamber 152 into the pressure chamber 12 through the collecting channel 140. In this state, the ink flowing out of the second pressure control chamber 152 into the circulation pump 500 and the ink flowing into the pressure chamber 12 flow into the second pressure control chamber 152 through the bypass channel 160 via the communication port 191B. In this case, the pressure chamber 12 is filled with the ink from the supply channel 130 and the ink from the collecting channel 140, and the inks are then ejected.

The backflow of the ink that occurs at high recording duty is a phenomenon caused by the presence of the bypass channel 160. An example in which the communication port 191B in the second pressure adjusting unit 150 turns to be in the open state according to the backflow of the ink has been described above. The backflow of the ink may occur in a state in which the communication port 191B in the second pressure adjusting unit 150 is in the open state. Even in a configuration without the second pressure adjusting unit 150, the presence of the bypass channel 160 may cause the backflow of the ink.

Configuration of ejection unit

Figs. 11A and 11B are schematic views of the circulation path for one color ink in the ejection unit 3 of this embodiment. Fig. 11A is an exploded perspective view of the ejection unit 3 viewed from the first supporting member 4. Fig. 11B is an exploded perspective view of the ejection unit 3 viewed from the ejection module 300. The arrows denoted as IN and OUT in Figs. 11A and 11B indicate flows of an ink. Although the flows of the ink are illustrated only for one color, this also applies to the other colors. The second supporting member 7 and the electrical wiring member 5 are omitted in Figs. 11A and 11B, and they are similarly omitted in the following description of the configuration of the ejection unit 3. The first supporting member 4 in Fig. 11A is illustrated in section taken along line XIA-XIA in Fig. 3A. The ejection module 300 includes an ejection element substrate 340 and an opening plate 330. Fig. 12 is a view illustrating the opening plate 330. Figs. 13 is a views illustrating the ejection element substrate 340.

The ejection unit 3 is supplied with an ink from the circulation unit 54 through the joint member 8 (see Fig. 3A). An ink path after the ink passes through the joint member 8 until the ink returns to the joint member 8 will be described. In the following drawings, the joint member 8 is omitted.

The ejection module 300 includes the ejection element substrate 340 and the opening plate 330 that constitute the silicon substrate 310 and further includes the ejection-port forming member 320. The ejection element substrate 340, the opening plate 330, and the ejection-port forming member 320 are stacked and bonded together such that the channels of the ink communicate to form the ejection module 300, and the ejection module 300 is supported by the first supporting member 4. The ejection module 300 is supported by the first supporting member 4 to form the ejection unit 3. The ejection element substrate 340 includes the ejection-port forming member 320, and the ejection-port forming member 320 includes a plurality of ejection port arrays in which a plurality of ejection ports 13 are arrayed and ejects, from the ejection ports 13, part of the ink supplied through an ink channel in the ejection module 300. The ink that has not been ejected is collected through an ink channel in the ejection module 300.

As illustrated in Figs. 11A and 11B and Fig. 12, the opening plate 330 includes a plurality of arrayed ink supply ports 311 and a plurality of arrayed ink collecting ports 312. As illustrated in Fig. 13 and Figs. 14A to 14C, the ejection element substrate 340 includes a plurality of arrayed supply connecting channels 323 and a plurality of arrayed collection connecting channels 324. The ejection element substrate 340 further includes the common supply channels 18 each

communicating with the plurality of supply connecting channels 323 and the common collecting channels 19 each communicating with the plurality of collection connecting channels 324. The ink channels in the ejection unit 3 are formed by causing the ink supply channels 48 and the ink collecting channels 49 (see Fig. 3A) provided in the first supporting member 4 to communicate with the channels provided in the ejection module 300. Supporting member supply ports 211 are sectional openings forming the ink supply channels 48 and supporting member collection ports 212 are sectional openings forming the ink collecting channels 49.

The ink to be supplied to the ejection unit 3 is supplied through the circulation unit 54 (see Fig. 3A) to the ink supply channel 48 (see Fig. 3A) in the first supporting member 4. The ink flowing through the supporting member supply port 211 in the ink supply channel 48 is supplied to the common supply channel 18 in the ejection element substrate 340 through the ink supply channel 48 (see Fig. 3A) and the ink supply port 311 of the opening plate 330 and enters the supply connecting channel 323. This is a supply channel. Subsequently, the ink passes through the pressure chamber 12 (see Fig. 3B) of the ejection-port formed member 320 and flows into the collection connecting channel 324 of a collecting channel. The details of the flow of the ink in the pressure chamber 12 will be described later.

In the collecting channel, the ink that has entered the collection connecting channel 324 flows into the common collecting channel 19. Subsequently, the ink flows from the common collecting channel 19 to the ink collecting channel 49 in the first supporting member 4 through the ink collecting port 312 of the opening plate 330 and is collected to the circulation unit 54 through the supporting member collection port 212.

Areas of the opening plate 330 having neither ink supply ports 311 nor ink collecting ports 312 correspond to areas for separating the supporting member supply ports 211 and the supporting member collection ports 212 in the first supporting member 4. The first supporting member 4 also has no opening in the areas. These areas are used as bonding areas when the ejection module 300 and the first supporting member 4 are bonded together.

In Fig. 12, in the opening plate 330, a plurality of arrays of openings that are arrayed in the X-direction are provided in the Y-direction, and supply (IN) openings and collecting (OUT) openings are alternately arrayed in the Y-direction so as to be shifted by a half pitch in the X-direction. In Fig. 13, the ejection element substrate 340 includes the common supply channels 18 each communicating with the plurality of supply connecting channels 323 arrayed in the Y-direction and the common collecting channels 19 each communicating with the plurality of collection connecting channels 324 arrayed in the Y-direction. The common supply channels 18 and the common collecting channels 19 are alternately arrayed in the X-direction. The common supply channels 18 and the common collecting channels 19 are separated for each type of ink, and the number of the common supply channels 18 disposed and the number of the common collecting channels 19 disposed are determined according to the number of ejection port arrays for each color. The supply connecting channels 323 and the collection connecting channels 324 are also disposed in number corresponding to the ejection ports 13. The supply connecting channels 323 and the collection connecting channels 324 do not necessarily have to be in one-to-one correspondence with the ejection ports 13. One supply connecting channel 323 and one collection connecting channel 324 may be provided for a plurality of ejection ports 13.

The opening plate 330 and the ejection element substrate 340 are stacked and bonded together such that the channels of the ink communicate to form the ejection module 300 and are supported by the first supporting member 4. Thus, the ink channel including the supply channel and the collecting channel described above is formed.

Figs. 14A to 14C are sectional views illustrating ink flows in different portions of the ejection unit 3. Fig. 14A is a sectional view taken along line XIVA-XIVA of Fig. 11A and illustrates a section of a portion where the ink supply channels 48 and the ink supply ports 311 in the ejection unit 3 communicate with each other.

Fig. 14B is a sectional view taken along line XIVB-XIVB of Fig. 11A and illustrates a section of a portion where the ink collecting channels 49 and the ink collecting ports 312 in the ejection unit 3 communicate with each other. Fig. 14C is a sectional view taken along line XIVC-XIVC of Fig. 11A and illustrates a section of a portion where the ink supply ports 311 and the ink collecting ports 312 do not communicate with the channels in the first supporting member 4.

In the supply channels for supplying an ink, the ink is supplied from the portions where the ink supply channels 48 of the first supporting member 4 and the ink supply ports 311 of the opening plate 330 overlap and communicate with each other, as illustrated in Fig. 14A. In the collecting channels for collecting the ink, the ink is collected from the portions where the ink collecting channels 49 of the first supporting member 4 and the ink collecting ports 312 of the opening plate 330 overlap and communicate with each other, as illustrated in Fig. 14B. The ejection unit 3 also has an area where no opening is provided in the opening plate 330, as illustrated in Fig. 14C. In such an area, the ink is neither supplied nor collected between the ejection element substrate 340 and the first supporting member 4. The ink is supplied in the area where the ink supply ports 311 are provided as in Fig. 14A, and the ink is collected in the area where the ink collecting ports 312 are provided as in Fig. 14B. This embodiment has been described using an example in which the opening plate 330 is used. Alternatively, the opening plate 330 may be omitted. For example, channels corresponding to the ink supply channels 48 and the ink collecting channels 49 may be formed in the first supporting member 4, and the ejection element substrate 340 may be bonded to the first supporting member 4.

Figs. 15A and 15B are sectional views illustrating the vicinity of the ejection port 13 in the ejection module 300. Figs. 16A and 16B are sectional views of an ejection module of a comparative example in which the common supply

channel 18 and the common collecting channel 19 are expanded in the X-direction. The thick arrows illustrated in the common supply channel 18 and the common collecting channel 19 in Figs. 15A and 15B and Figs. 16A and 16B indicate oscillation of the ink in a configuration in which the serial-type liquid ejecting apparatus 50 is used. The ink supplied to the pressure chamber 12 through the common supply channel 18 and the supply connecting channel 323 is ejected from the ejection port 13 by the driving of the ejection element 15. When the ejection element 15 is not driven, the ink is collected from the pressure chamber 12 to the common collecting channel 19 through the collection connecting channel 324 serving as a collecting channel.

When ejection of such a circulating ink is performed in the configuration using the serial-type liquid ejecting apparatus 50, the ejection of the ink is affected not a little by oscillation of the ink in the ink channel due to the main scanning of the liquid ejecting head 1. Specifically, the effect of oscillation of the ink in the ink channel may cause a difference in the amount of ink ejected or a shift in the ejection direction. In the case where the common supply channel 18 and the common collecting channel 19 have a wide sectional shape in the X-direction, which is the main scanning direction, as illustrated in Figs. 16A and 16B, the ink in the common supply channel 18 and the common collecting channel 19 are susceptible to the effect of the inertial force in the main scanning direction, large oscillation occurs in the ink. As a result, oscillation of the ink may affect the ejection of the ink from the ejection port 13. Furthermore, the expansion of the common supply channel 18 and the common collecting channel 19 in the X-direction may increase the distance between the colors, and the printing efficiency may decrease.

In view of the above, the common supply channels 18 and the common collecting channels 19 of this embodiment extend in the Y-direction in the section illustrated in Figs. 15A and 15B, and extend also in the Z-direction perpendicular to the X-direction, which is the main scanning direction. This configuration enables the widths of the common supply channels 18 and the common collecting channels 19 in the main scanning direction to be decreased. The decrease in the widths of the common supply channel 18 and the common collecting channel 19 in the main scanning direction reduces oscillation of the ink due to the inertial force (the thick arrows in the drawings) acting on the ink in the common supply channel 18 and the common collecting channel 19 in the direction opposite to the main scanning direction during main scanning. This can reduce the effect of oscillation of the ink on the ejection of the ink. The extension of the common supply channel 18 and the common collecting channel 19 in the Z-direction increases the sectional areas to reduce the channel pressure loss.

Although the oscillation of the ink in the common supply channel 18 and the common collecting channel 19 during main scanning is reduced by decreasing the widths of the common supply channel 18 and the common collecting channel 19 in the main scanning direction, as described above, the oscillation is not completely eliminated. In view of the above, to prevent the difference in ejection among the types of the inks, which may be caused even by reduced oscillation, this embodiment is configured such that the common supply channels 18 and the common collecting channels 19 are arranged so as to overlap in the X-direction.

In this embodiment, the supply connecting channel 323 and the collection connecting channel 324 are disposed so as to correspond to the ejection port 13, and the supply connecting channel 323 and the collection connecting channel 324 are arranged side by side in the X-direction, with the ejection port 13 therebetween, as described above. Therefore, if there is a portion where the common supply channel 18 and the common collecting channel 19 do not overlap in the X-direction, and the correspondence relationship between the supply connecting channel 323 and the collection connecting channel 324 in the X-direction is broken, the flow of the ink in the pressure chamber 12 in the X-direction and the ejection are affected. The effect of oscillation of the ink is added, and consequently, the ejection of the ink from each ejection port may be affected.

Accordingly, when the common supply channel 18 and the common collecting channel 19 are arranged so as to overlap in the X-direction, the oscillation of the ink in the common supply channel 18 and the common collecting channel 19 during main scanning becomes substantially equal at any position in the Y-direction in which the election ports 13 are arrayed. As a result, the pressure difference between the common supply channel 18 and the common collecting channel 19 in the pressure chamber 12 does not significantly vary, and stable ejection can be performed.

In some liquid ejecting heads, channels for supplying an ink to the liquid ejecting heads and channels for collecting the ink are the same channels. In contrast, in this embodiment, the common supply channel 18 and the common collecting channel 19 are different channels. The supply connecting channel 323 and the pressure chamber 12 communicate with each other, the pressure chamber 12 and the collection connecting channel 324 communicate with each other, and the ink is ejected from the ejection port 13 of the pressure chamber 12. That is, the pressure chamber 12 connecting the supply connecting channel 323 and the collection connecting channel 324 includes the ejection port 13. Consequently, an ink flow occurs from the supply connecting channel 323 to the collection connecting channel 324 in the pressure chamber 12, and the ink in the pressure chamber 12 is efficiently circulated. The efficient circulation of the ink in the pressure chamber 12 enables the ink in the pressure chamber 12, which is susceptible to the influence of ink evaporation from the ejection port 13, to be kept fresh.

The communication of the two channels, i.e., the common supply channel 18 and the common collecting channel 19, with the pressure chamber 12 enables the ink to be supplied through both of the channels if ejection at a high flow

rate is necessary. That is, the configuration of this embodiment has the advantage of capable of not only efficiently performing circulation but also achieving ejection at a high flow rate, compared with a configuration in which the supply and the collection of the ink are performed using only one channel.

The common supply channel 18 and the common collecting channel 19 may be disposed close to each other in the X-direction to reduce the effect of oscillation of the ink. The interval between the common supply channel 18 and the common collecting channel 19 is preferably 75 $\mu$m to 100 $\mu$m.

Fig. 17 is a view illustrating an ejection element substrate 340 of a comparative example. In Fig. 17, the supply connecting channels 323 and the collection connecting channels 324 are omitted. Since the ink flowing into the common collecting channel 19 is subjected to thermal energy by the ejection element 15 in the pressure chamber 12, the temperature of this ink is relatively higher than the temperature of the ink in the common supply channel 18. In the comparative example, the ejection element substrate 340 has a portion in the X-direction, like a portion $\alpha$ surrounded by the dash-dotted line in Fig. 17, in which only the common collecting channels 19 are present. In this case, the temperature locally increases in the portion, and temperature unevenness occurs in the ejection module 300, which may affect the ejection.

The temperature of the ink flowing in the common supply channel 18 is relatively lower than that of the ink in the common collecting channel 19. Therefore, when the common supply channel 18 and the common collecting channel 19 are adjacent to each other, in the vicinity of the channels, the temperature can be partially offset with the common supply channel 18 and the common collecting channel 19 to prevent an increase in the temperature. Accordingly, the common supply channels 18 and the common collecting channels 19 may have substantially the same length, may be present at positions overlapping in the X-direction, and may be adjacent to each other.

Figs. 18A and 18B are views illustrating the channel configuration of the liquid ejecting head 1 for the inks of three colors, namely, cyan (C), magenta (M), and yellow (Y). The liquid ejecting head 1 includes circulating channels for the individual types of inks, as illustrated in Fig. 18A. The pressure chambers 12 are disposed in the X-direction, which is the main scanning direction of the liquid ejecting head 1. As illustrated in Fig. 18B, the common supply channels 18 and the common collecting channels 19 are disposed along the ejection port arrays in which the ejection ports 13 are arrayed, and the common supply channels 18 and the common collecting channels 19 extend in the Y-direction, with the corresponding discharge port array therebetween. Connection between main body and liquid ejecting head

Fig. 19 is schematic view illustrating in more detail a connection state of an ink tank 2 and an external pump 21 that are provided in the main body of the liquid ejecting apparatus 50 of this embodiment and a liquid ejecting head 1 and the arrangement of a circulation pump, etc. The liquid ejecting apparatus 50 of this embodiment has a configuration in which only the liquid ejecting head 1 can be easily replaced if a trouble occurs in the liquid ejecting head 1. Specifically, the liquid ejecting apparatus 50 includes a liquid connecting unit 700 with which connection and separation between an ink supply tube 59 connected to the external pump 21 and the liquid ejecting head 1 can be easily performed. Thus, only the liquid ejecting head 1 can be easily attached to and detached from the liquid ejecting apparatus 50.

The liquid connecting unit 700 includes a liquid-connector insertion port 53a provided on a head casing 53 of the liquid ejecting head 1 in a protruding manner and a cylindrical liquid connector 59a in which the liquid-connector insertion port 53a can be inserted, as illustrated in Fig. 19. The liquid-connector insertion port 53a is connected to the ink supply channel (inflow channel) formed in the liquid ejecting head 1 so as to provide a continuous liquid flow and is connected to the first pressure adjusting unit 120 through the filter 110 described above. The liquid connector 59a is provided at a leading end of the ink supply tube 59 connected to the external pump 21 that pressurizes and supplies the ink in the ink tank 2 to the liquid ejecting head 1.

As described above, the liquid ejecting head 1 illustrated in Fig. 19 is configured such that the attachment/detachment and the replacement of the liquid ejecting head 1 can be easily performed with the liquid connecting unit 700. However, if sealing properties between the liquid-connector insertion port 53a and the liquid connector 59a deteriorate, the ink pressurized and supplied by the external pump 21 may leak out from the liquid connecting unit 700. If the leaked ink adheres to the circulation pump 500 or the like, a malfunction may occur in the electrical system. In view of this, the circulation pump and other components in this embodiment are arranged as described below.

Arrangement of circulation pump, etc.

In this embodiment, to avoid adhesion of the ink leaking out from the liquid connecting unit 700 to the circulation pump 500, the circulation pump 500 is disposed above the liquid connecting unit 700 in the direction of gravity, as illustrated in Fig. 19. That is, the circulation pump 500 is disposed above the liquid-connector insertion port 53a serving as a liquid inlet of the liquid ejecting head 1 in the direction of gravity. Furthermore, the circulation pump 500 is disposed at a position where the circulation pump 500 is not in contact with the members constituting the liquid connecting unit 700. With this configuration, even if the ink leaks out from the liquid connecting unit 700, the ink can flow in the horizontal direction, which is a direction in which the liquid connector 59a is opened, or in the vertically downward direction to thereby prevent the ink from reaching the circulation pump 500 disposed in the vertically upward direction. In addition, since the circulation pump 500 is disposed at a position apart from the liquid connecting unit 700, the possibility that the

ink travels through the members and reaches the circulation pump 500 is also reduced.

In addition, an electrical connection portion 515 that electrically connects the circulation pump 500 and an electrical contact substrate 6 with a flexible wiring member 514 therebetween is disposed above the liquid connecting unit 700 in the direction of gravity. This enables the reduction of the possibility of electrical problems caused by the ink from the liquid connecting unit 700.

In this embodiment, a wall portion 53b of the head casing 53 is provided. Thus, even if the ink is jetted from an opening 59b of the liquid connecting unit 700, the ink can be blocked to reduce the possibility of reaching of the ink to the circulation pump 500 and the electrical connection portion 515.

Liquid ejecting head with common liquid chamber circulation configuration

In the above embodiments, examples of the configuration in which an ink is circulated up to nozzle portions through which the ink is ejected have been described. As an example of a simpler configuration, a system is also conceivable in which an ink is circulated through an ink channel to a common liquid chamber section that communicates with each nozzle to supply the ink.

Figs. 20A to 20C are views illustrating a channel configuration of a liquid ejecting head with a common liquid chamber circulation system of this embodiment. Fig. 20B is a sectional view taken along line XXB-XXB of Fig. 20A, and Fig. 20C is a sectional view taken along line XXC-XXC of Fig. 20A. An ink to be ejected from an ejection port 13 is supplied to a common liquid chamber 603 through a common supply channel 601. The common liquid chamber 603 communicates with a pressure chamber, and the ink is supplied to an ejection port 13 and ejected. On the other hand, the common liquid chamber 603 is connected to a common collecting channel 602, and a pressure difference is generated from the common supply channel 601 to the common collecting channel 602 to thereby circulate the ink.

In this system, although ink circulation is not performed in nozzle portions, ink circulation is performed up to a common liquid chamber section close to nozzles. Accordingly, for an ink containing titanium oxide and wax, a reduction in precipitation and stable ejection can be similarly expected.

(2) Ink

Hereinafter, inks that can be used in the ink-jet recording method according to the present invention will be described in detail with reference to exemplary embodiments. In the present invention, when compounds are salts, such a salt dissociates into ions in an ink; however the ink is described as "containing the salt" for convenience. Titanium oxide and titanium oxide particles may be simply referred to as "pigments". Ink-jet aqueous inks may be simply referred to as "inks". Physical property values are values at ordinary temperature (25°C) unless otherwise specified. In the case of recording an image with a white ink, the white ink may be used for background color treatment for color inks. In such a case, the image can be recorded by applying color inks (such as black, cyan, magenta, and yellow inks) so as to overlap at least part of the region to which the white ink has been applied. The background color treatment can also be applied to back printing in which a white ink is applied so as to overlap at least part of a region to which a color ink has been applied.

Aqueous ink and method for producing aqueous ink

The ink according to the present invention is a white ink containing titanium oxide. This ink can be a white ink because titanium oxide is a white pigment. The ink according to the present invention need not be what is called a "curable ink". Accordingly, the ink according to the present invention does not necessarily contain a compound, such as a polymerizable monomer that can be polymerized by application of external energy, such as heat or light. The components contained in the ink according to the present invention, physical properties of the ink, a production method, and so forth will be described in detail below.

Coloring material

The ink contains titanium oxide as a coloring material (pigment). The titanium oxide may be a titanium oxide particle subjected to surface treatment with a specific inorganic oxide. That is, the ink may contain a titanium oxide particle which is titanium oxide having a surface covered with a specific inorganic oxide. The titanium oxide particle content (% by mass) in the ink is preferably 0.10% by mass or more and 20.00% or less based on the total mass of the ink. The titanium oxide particle content (% by mass) in the ink is more preferably 1.00% by mass or more and 20.00% or less based on the total mass of the ink. The titanium oxide particle content (% by mass) in the ink is particularly preferably 1.00% by mass or more and 15.00% or less based on the total mass of the ink.

Titanium oxide is a white pigment and has three crystal forms, namely, rutile, anatase, and brookite. Of these,

rutile titanium oxide can be used. Industrial methods for producing titanium oxide include a sulfuric acid method and a chlorine method. Titanium oxide used in the present invention may be produced by any production method.

The volume-based 50% cumulative particle size (hereinafter, also referred to as an "average particle size") of the titanium oxide particle is preferably 200 nm or more and 500 nm or less. In particular, the volume-based 50% cumulative particle size of the titanium oxide particle is more preferably 200 nm or more and 400 nm or less.

The volume-based 50% cumulative particle size ($D_{50}$) of the titanium oxide particle is the diameter of a particle corresponding to 50% when integrated from the small particle size side on the basis of the total volume of the measured particles in a particle-size cumulative curve. The $D_{50}$ of the titanium oxide particle can be measured under the following conditions: for example, SetZero: 30 seconds, the number of measurements: three times, measurement time: 180 seconds, shape: non-spherical, refractive index: 2.60. The particle size distribution measurement apparatus used may be a particle size analyzer using a dynamic light scattering method. As a matter of course, the measurement conditions and the like are not limited to those described above.

The titanium oxide used may be surface-treated with alumina and silica. The surface treatment is expected to suppress photocatalytic activity and to improve dispersibility. In this specification, "alumina" is a generic term for oxides of aluminum, such as aluminum oxide. In this specification, "silica" is a generic term for silicon dioxide and substances constituted by silicon dioxide. Most of the alumina and silica covering the titanium oxide are present in the form of aluminum oxide and silicon dioxide. In this Specification, "alumina" is the general term for oxides of aluminum such as aluminum oxide. In this Specification, "silica" is the general term for silicon dioxide and substances constituted by silicon dioxide. Most of the alumina and silica covering the titanium oxide are present in the forms of silicon dioxide and aluminum oxide.

The proportion (% by mass) of titanium oxide in the titanium oxide particle is preferably 90.00% by mass or more based on the total mass of the titanium oxide particle. The proportion (% by mass) of titanium oxide in the titanium oxide particle is preferably 98.50% by mass or less based on the total mass of the titanium oxide particle. The proportion (% by mass) of alumina on the titanium oxide particle needs to be 0.50 times or more and 1.00 time or less the proportion (% by mass) of silica in terms of mass ratio. If the mass ratio is less than 0.50 times or exceeds 1.00 time, ejection stability of the ink is not obtained. The proportion (% by mass) of silica on the titanium oxide particle is preferably 1.00% by mass or more and 4.00% by mass or less based on the total mass of the titanium oxide particle. If the proportion (% by mass) of silica is less than 1.00% by mass, the affinity for a compound represented by general formula (1) below may be insufficient, and sufficient ejection stability of the ink is not obtained in some cases. If the proportion (% by mass) of silica exceeds 4.00% by mass, the amount of compound represented by general formula (1) and adsorbed on the titanium oxide particle may not be reduced even if the surface treatment is performed with alumina, and sufficient ejection stability of the ink is not obtained in some cases. The proportion (% by mass) of alumina on the titanium oxide particle is preferably 0.50% by mass or more and 4.00% by mass or less based on the total mass of the titanium oxide particle.

The method of measuring the proportions of alumina and silica on the titanium oxide particle, that is, the covering amounts of alumina and silica, may be, for example, quantitative analysis of aluminum and silicon elements by inductively coupled plasma (ICP) optical emission spectrometry. In this case, all atoms covering the surface are assumed to be in the form of oxides, and the measured values of aluminum and silicon are converted on the basis of their oxides, that is, alumina and silica, to thereby determine the proportions. The proportion (% by mass) of the aluminum element on the titanium oxide particle is 0.57 times or more and 1.13 times or less the proportion (% by mass) of the silicon element in terms of mass ratio, the proportions being determined by inductively coupled plasma-optical emission spectrometry. When these values are converted on the basis of their oxides, that is, alumina and silica, the proportion (% by mass) of alumina on the titanium oxide particle is 0.50 times or more and 1.00 time or less the proportion (% by mass) of silica in terms of mass ratio.

The surface treatment process for titanium oxide may be, for example, a wet process or a dry process. For example, the surface treatment can be performed by dispersing titanium oxide in a liquid medium and then causing the titanium oxide to react with surface treating agents such as sodium aluminate and sodium silicate. The proportions of the surface treating agents can be appropriately changed to perform adjustment to desired properties. For the surface treatment, in addition to alumina and silica, inorganic oxides such as zinc oxide and zirconia, and organic substances such as polyols can be used as long as the effects of the present invention are not impaired.

The ink may contain another pigment other than titanium oxide as long as the effects of the present invention are not impaired. In this case, the ink may be a color ink other than a white ink. The content (% by mass) of the other pigment in the ink is preferably 0.10% by mass or more and 5.00% by mass or less, more preferably 0.10% by mass or more and 1.00% by mass or less, based on the total mass of the ink. Compound represented by general formula (1)

The ink may contain a compound represented by general formula (1) below as a dispersant for dispersing the titanium oxide particle. The content (% by mass) of the compound represented by general formula (1) in the ink is preferably 0.01% by mass or more and 1.00% or less, more preferably 0.02% by mass or more and 0.50% or less, based on the total mass of the ink.

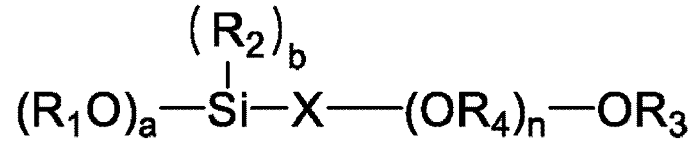

(1)

In general formula (1), $R_1$, $R_2$, and $R_3$ are each independently a hydrogen atom or an alkyl group having 1 to 4 carbon atoms. Each $R_4$ is independently an alkylene group having 2 to 4 carbon atoms. X is a single bond or an alkylene group having 1 to 6 carbon atoms, and n is 6 to 24. a is 1 to 3, b is 0 to 2, and a + b = 3.

In general formula (1), $R_1$, $R_2$, and $R_3$ are each independently a hydrogen atom or an alkyl group having 1 to 4 carbon atoms. Examples of the alkyl group having 1 to 4 carbon atoms include a methyl group, an ethyl group, a n-propyl group, an i-propyl group, and a n-butyl group. Of these, a methyl group is preferred from the viewpoint of the ease of hydrolysis. When $R_1$, $R_2$, and $R_3$ are each an alkyl group having more than 4 carbon atoms, formation of a silanol group due to hydrolysis is difficult to achieve and the affinity for the titanium oxide particle is not obtained. Thus, the titanium oxide particle is not stably dispersed, and the ejection stability of the ink is not obtained. In the formula, a, which represents the number of RiO's, is 1 to 3, b, which represents the number of $R_2$'s is 0 to 2, and a + b = 3. In particular, preferably, a is 3 and b is 0, specifically, the three substituents on the silicon atom are each RiO.

In general formula (1), each $R_4$ is independently an alkylene group having 2 to 4 carbon atoms. Examples of the alkylene group having 2 to 4 carbon atoms include an ethylene group, a n-propylene group, an i-propylene group, and a n-butylene group. Of these, an ethylene group is preferred. The number of $OR_4$'s, that is, n (average value), which represents the number of alkylene oxide groups, is 6 to 24. When n is less than 6, the alkylene oxide chain is excessively short, and thus the repulsive force due to steric hindrance is not sufficiently obtained, and sufficient ejection stability of the ink is not obtained. When n is more than 24, the alkylene oxide chain is excessively long, so that it has enhanced hydrophilicity and is likely to be present in free form in an aqueous medium. Therefore, the affinity for the surface hydroxy group of the titanium oxide particle is not sufficiently obtained, and aggregation of the titanium oxide particle is not suppressed. Accordingly, the titanium oxide particle is not stably dispersed, and ejection stability of the ink is not obtained.

In general formula (1), X is a single bond or an alkylene group having 1 to 6 carbon atoms. When X is a single bond, it means that the silicon atom and $OR_4$ are directly bonded to each other. Examples of the alkylene group having 1 to 6 carbon atoms include a methylene group, an ethylene group, a n-propylene group, an i-propylene group, a n-butylene group, a n-pentylene group, and a n-hexylene group. Of these, a n-propylene group is preferred. When X is an alkylene group having more than 6 carbon atoms, the compound represented by general formula (1) has excessively high hydrophobicity, and thus the titanium oxide particle is not stably dispersed, and ejection stability of the ink is not obtained.

The compound represented by general formula (1) and serving as a dispersant of the titanium oxide particle may be a compound represented by general formula (2) below. The compound represented by general formula (2) has three ORi's bonded to the silicon atom. Thus, the compound can be partially hydrolyzed in an aqueous medium to form three hydroxy groups bonded to the silicon atom, thereby increasing moieties having an affinity for the titanium oxide particle. The compound represented by general formula (2) below has a repeating structure of ethylene oxide groups. Thus, the ethylene oxide chain appropriately extends in an aqueous medium to provide the repulsive force due to steric hindrance.

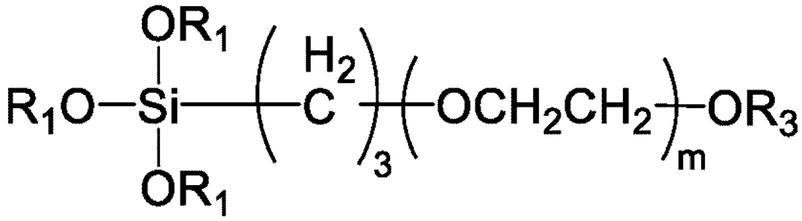

(2)

In general formula (2), $R_1$ and $R_3$ are each independently a hydrogen atom or an alkyl group having 1 to 4 carbon atoms, and m is 8 to 24.

The content (% by mass) of the compound represented by general formula (1) in the ink is preferably 0.002 times or more and 0.10 times or less the content (% by mass) of the titanium oxide particle in terms of a mass ratio. If the mass ratio is less than 0.002 times, the effect of stably dispersing the titanium oxide particle is weak, and the ejection stability of the ink is not sufficiently obtained in some cases. If the mass ratio exceeds 0.10 times, the proportion of the compound represented by general formula (1) is excessively high, and the intermolecular condensation (selfcondensation) of the compound represented by general formula (1) occurs easily. Accordingly, the compound represented by

general formula (1) is consumed without acting as a dispersant. Thus, the effect of stably dispersing the titanium oxide particle is weak, and the ejection stability of the ink is not sufficiently obtained in some cases.

The compound represented by general formula (1) forms hydrogen bonds with the surface hydroxy groups of the titanium oxide particle, and a part thereof is considered to form covalent bonds due to a dehydration reaction. However, in the present invention, the compound represented by general formula (1) can disperse the titanium oxide particle even if the compound does not form a covalent bond with the titanium oxide particle. That is, the amount of compound that is represented by general formula (1) and covalently bonded to the titanium oxide particle is very small and negligible. Therefore, the content of the titanium oxide particle is defined as not including the amount of compound that is represented by general formula (1) and covalently bonded to the titanium oxide particle. As a result of studies conducted by the inventors, it has been found that an excessively large amount of compound that is represented by general formula (1) and covalently bonded to the titanium oxide particle deteriorates the ejection stability of the ink. The reason for this is considered as follows: In general, in a liquid medium having a high dielectric constant, such as water, an electrostatic attractive force is less likely to act, and thus the titanium oxide particle freely moves without being significantly affected by the surrounding environment. However, when the compound represented by general formula (1) is covalently bonded to the titanium oxide particle, a hydrophilic moiety ($OR_4$ moiety) of the structure of general formula (1) forms a hydrogen bond with a water molecule, which may consequently affect the movement of the titanium oxide particle in some cases. Therefore, in a situation in which deformation due to an instantaneous pressure is applied to a liquid, as in the case of ink-jet ejection, the above-described properties appear as a difference in ejection characteristics. For this reason, the amount (% by mass) of compound that is represented by general formula (1) and covalently bonded to the titanium oxide particle is preferably 0.001 times or less the content (% by mass) of the titanium oxide particle in terms of mass ratio. When the mass ratio is more than 0.001 times, the ejection stability of the ink is not sufficiently obtained in some cases. The mass ratio may be 0.000 times. The amount of compound that is represented by general formula (1) and covalently bonded to the titanium oxide particle can be calculated by, for example, thermogravimetric analysis.

Wax particle

In the present invention, the ink contains a wax particle. The wax may be a composition containing a component other than a wax or a wax itself. The wax particle may be dispersed with a dispersant such as a surfactant or a resin.

In a narrow sense, waxes are esters of a water-insoluble, higher, monohydric or dihydric alcohol and a fatty acid, include animal waxes and plant waxes, but do not include fats and oils or fats. In a broad sense, waxes include high-melting-point fats, mineral waxes, petroleum waxes, and blends and modified products of various waxes. In the recording method according to the present invention, waxes in the broad sense can be used without limitations. The waxes in the broad sense can be classified into natural waxes, synthetic waxes, blends thereof (wax blends), and modified products thereof (modified waxes).

Examples of the natural waxes include animal waxes such as beeswax, spermaceti, and wool wax (lanolin); plant waxes such as Japan wax, carnauba wax, sugarcane wax, palm wax, candelilla wax, and rice wax; mineral waxes such as montan wax; and petroleum waxes such as paraffin wax, microcrystalline wax, and petrolatum. Examples of the synthetic waxes include hydrocarbon waxes such as Fischer-Tropsch waxes and polyolefin waxes (examples: polyethylene wax and polypropylene wax). The wax blends are mixtures of various waxes described above. The modified waxes are provided by subjecting the above-described various waxes to modification treatment, such as oxidation, hydrogenation, alcohol modification, acrylic modification, or urethane modification. The wax is preferably at least one selected from the group consisting of microcrystalline wax, Fischer-Tropsch wax, polyolefin wax, paraffin wax, modified products thereof, and blends thereof. Of these, a blend of a plurality of waxes is more preferred, and a blend of a petroleum wax and a synthetic wax is particularly preferred.

The wax can be solid at ordinary temperature (25°C). The melting point (°C) of the wax is preferably 40°C or higher and 120°C or lower, more preferably 50°C or higher and 100°C or lower. The melting point of the wax can be measured in accordance with the test method described in 5.3.1 (melting point test method) of JIS K2235: 1991 (petroleum waxes). In the cases of microcrystalline wax, petrolatum, and a mixture of a plurality of waxes, the melting point can be more accurately measured by the test method described in 5.3.2. The melting points of waxes are likely to be affected by properties such as the molecular weight (the higher the molecular weight, the higher the melting point), molecular structure (a linear structure has a high melting point, and the presence of a branched structure results in a decrease in the melting point), crystallinity (the higher the crystallinity, the higher the melting point), and density (the higher the density, the higher the melting point). Thus, a wax having a desired melting point can be provided by controlling these properties.

Resin

The ink can contain a resin. Examples of the resin include acrylic resins, urethane resins, and urea resins. Of these, an acrylic resin is preferred. The resin content (% by mass) in the ink is preferably 1.00% by mass or more and 25.00% by mass or less, more preferably 3.00% by mass or more and 15.00% by mass or less, particularly preferably 5.00% by mass or more and 15.00% by mass or less, based on the total mass of the ink.

The resin can be contained in the ink for the purpose of improving various properties of images to be recorded, such as scratch resistance and the hiding property. Examples of the form of the resin include block copolymers, random copolymers, graft copolymers, and combinations thereof. The resin may be a water-soluble resin that is soluble in an aqueous medium, or may be a resin particle that is dispersed in an aqueous medium. The resin particle does not necessarily contain a coloring material.

In this specification, the phrase "resin is water-soluble" means that when the resin is neutralized with an alkali in an amount equivalent to the acid value, the resin is present in an aqueous medium without forming a particle whose particle size can be measured by a dynamic light scattering method. Whether or not the resin is water-soluble can be determined in accordance with the following method: First, a liquid (resin solid content: 10% by mass) containing a resin neutralized with an alkali (such as sodium hydroxide or potassium hydroxide) corresponding to the acid value is prepared. The prepared liquid is then diluted 10-fold (on a volume basis) with pure water to prepare a sample solution.

Subsequently, when the particle size of the resin in the sample solution is measured by a dynamic light scattering method and no particle having a particle size is measured, the resin can be determined to be water-soluble. The measurement conditions in this case can be set as follows: for example, SetZero: 30 seconds, the number of measurements: three times, measurement time: 180 seconds. The particle size distribution measurement apparatus used may be, for example, a particle size analyzer using a dynamic light scattering method (for example, trade name "UPA-EX150", manufactured by Nikkiso Co., Ltd.). As a matter of course, the particle size distribution measurement apparatus, measurement conditions, and the like used are not limited to those described above.

The acid value of the water-soluble resin is preferably 80 mgKOH/g or more and 250 mgKOH/g or less, more preferably 100 mgKOH/g or more and 200 mgKOH/g or less. When a resin particle is used, the acid value thereof is preferably 0 mgKOH/g or more and 50 mgKOH/g or less. The weight-average molecular weight of the resin is preferably 1,000 or more and 30,000 or less, more preferably 5,000 or more and 15,000 or less. The weight-average molecular weight of the resin is a value measured by gel permeation chromatography (GPC) in terms of polystyrene.

Aqueous medium

The ink is an aqueous ink containing water as an aqueous medium. The ink may contain, as the aqueous medium, water or a mixed solvent of water and a water-soluble organic solvent. The water can be deionized water (ion-exchanged water). The water content (% by mass) in the ink is preferably 50.00% by mass or more and 95.00% by mass or less, based on the total mass of the ink.

The water-soluble organic solvent is not particularly limited as long as it is water-soluble (it may be an organic solvent that dissolves in water in any ratio at 25°C). Specific examples of the water-soluble organic solvent that can be used include monohydric and polyhydric alcohols, alkylene glycols, glycol ethers, nitrogen-containing polar compounds, and sulfur-containing polar compounds. The water-soluble organic solvent content (% by mass) in the ink is preferably 3.00% by mass or more and 50.00% or less, more preferably 10.00% by mass or more and 40.00% or less, based on the total mass of the ink. If the water-soluble organic solvent content (% by mass) is less than 3.00% by mass, the ink may stick in an ink-jet recording apparatus and may have insufficient sticking resistance. If the water-soluble organic solvent content (% by mass) exceeds 50.00% by mass, supply failure of the ink may occur. Other additives

In addition to the above additives, the ink may contain various additives, such as a surfactant, a pH adjuster, an anticorrosive, a preservative, a fungicide, an antioxidant, a reducing inhibitor, an evaporation promoter, and a chelating agent, as needed. In particular, the ink can contain a surfactant. The surfactant content (% by mass) in the ink is preferably 0.10% by mass or more and 5.00% or less, more preferably 0.10% by mass or more and 2.00% or less, based on the total mass of the ink. Examples of the surfactant include anionic surfactants, cationic surfactants, and nonionic surfactants. Of these, a nonionic surfactant that has a low affinity for the titanium oxide particle and that provides the effect even in a small amount can be used because the surfactant is used to adjust various physical properties of the ink.

Physical properties of ink

The ink is an ink applied to the ink-jet system, and thus the physical properties thereof can be appropriately controlled. The surface tension of the ink at 25°C is preferably 10 mN/m or more and 60 mN/m or less, more preferably 20 mN/m or more and 40 mN/m or less. The surface tension of the ink can be adjusted by appropriately determining the type and amount of the surfactant in the ink. The viscosity of the white ink in the present invention is preferably 1.0 mPa

s or more and 10.0 mPa·s or less at 25°C, as described above. The pH of the ink at 25°C is preferably 7.0 or more and 9.0 or less. When the pH of the ink is within the above range, formation of a silanol group due to hydrolysis of the compound represented by general formula (1) proceeds, and thus the weak affinity between the titanium oxide particle and the compound represented by general formula (1) is effectively exhibited. The pH of the ink can be measured with an ordinary pH meter including, for example, a glass electrode.

Method for producing ink

A method for producing an ink according to the present invention includes a step of mixing a titanium oxide particle dispersion liquid and other ink components. The titanium oxide particle dispersion liquid used is a titanium oxide particle dispersion liquid produced by a production method described later. Examples of the other ink components include water, a water-soluble organic solvent, a resin, and the above-described "other additives" to be further added. The ink may be produced by, for example, adding the titanium oxide particle dispersion liquid and other ink components to a suitable container, and stirring the mixture. Conditions, such as the stirring speed, the temperature, and the time, can be appropriately set according to desired conditions. Other publicly known production steps may be combined.

Method for producing titanium oxide particle dispersion liquid

A method for producing a titanium oxide particle dispersion liquid according to the present invention is used for producing an ink-jet aqueous ink. The method includes a step (first step) of causing a predetermined treating agent to react with the surface of titanium oxide to prepare a titanium oxide particle which is titanium oxide having a surface covered with alumina and silica. The method further includes, after the first step, a dispersion step (second step) of dispersing the titanium oxide particle in a liquid medium with a compound represented by general formula (1), the compound being used for dispersing the titanium oxide particle.

EXAMPLES

The present invention will be described in more detail below by way of Examples. The present invention is not limited by the following Examples without departing from the spirit and scope of the present invention. Regarding the amounts of components, "parts" and "%" are based on mass unless otherwise specified. A titanium oxide particle dispersion liquid is referred to as a "pigment dispersion liquid".

Preparation of titanium oxide

A commercially available rutile titanium oxide particle subjected to surface treatment in advance was used. The volume-based 50% cumulative particle size ($D_{50}$) of the titanium oxide particle was measured with a particle size analyzer using a dynamic light scattering method (trade name "Nanotrac Wave II-EX150", manufactured by MicrotracBEL Corp.). Properties of the titanium oxide particle are shown in Table 1.

Table 1

| Properties of titanium oxide particle | | | | |
|---|---|---|---|---|
| Titanium oxide particle | Type | Manufacturer | Surface treatment | $D_{50}$ (nm) |
| 1 | TIPAQUE CR-60-2 | Ishihara Sangyo Kaisha, Ltd. | Alumina, Silica | 210 |

Preparation of pigment dispersion liquid

A styrene-methyl methacrylate-methacrylic acid copolymer (resin 1) having an acid value of 150 mgKOH/g and a weight-average molecular weight of 10,000 was prepared. Subsequently, 20.0 parts of resin 1 was neutralized with potassium hydroxide in an amount equimolar to the acid value thereof, and an appropriate amount of pure water was added thereto to prepare an aqueous solution of resin 1, the aqueous solution having a resin content (solid content) of 20.0%. Subsequently, 40.0 parts of titanium oxide particle 1, 40.0 parts of the aqueous solution of resin 1, and ion-exchanged water used in an amount such that the total amount of the components was 100.0 parts were mixed, and preliminary dispersion treatment was performed with a homogenizer. Dispersion treatment (main dispersion treatment) was then performed at 25°C for 12 hours with a paint shaker using 0.5 mm zirconia beads. The zirconia beads were separated by filtration. An appropriate amount of ion-exchanged water was added as necessary to prepare a pigment dispersion liquid 1 having a titanium oxide particle content of 40.0% and a resin dispersant (resin 1) content of 8.0%.

Preparation of Ink

Next, 25.0 parts of the pigment dispersion liquid 1 and components below were mixed and stirred. Subsequently, pressure filtration was performed with a membrane filter (manufactured by Sartorius) having a pore size of 5.0 μm to prepare ink 1. Ink 1 had a viscosity (Pa s) of 10 mPa·s.
Details of each mixed component are described below.

- Acrylic resin particle (trade name "VINYBLAN 2685", manufactured by Nissin Chemical Industry Co., Ltd., resin particle content: 30%) 20.0 parts
- Paraffin wax (trade name "AQUACER 498", wax particle content: 50.0%, melting point of wax particle: 60°C) 4.0 parts
- Diethylene glycol: 20.0 parts
- Diethylene glycol isobutyl ether: 20.0 parts
- Fluorinated surfactant (trade name "Capstone FS-3100", manufactured by Chemours): 1.0 part
- Ion-exchanged water: 30.0 parts

The above ink described in Example was used, and the ink was ejected using the above-described liquid ejecting apparatus. Consequently, it was confirmed that the effects of the present invention were sufficiently obtained.
The present invention can provide an ink-jet recording method that enables ejection of a white ink containing titanium oxide while suppressing precipitation and that provides an image having improved scratch resistance.
While the present invention has been described with reference to one or more embodiments, it is to be understood that the invention is not limited solely to the disclosed exemplary embodiments. The embodiments described above can be implmeneted solely or as a combination of a plurality of elements or features thereof where necessary or where the combination of the elements of features from individual embodiments in a single embodiment is benficial. The scope of the following claims is to be accorded the broadest interpretation so as to encompass all such modifications and equivalent structures and functions apparent or obvious to the skilled person.

## Claims

1. An ink-jet recording method comprising ejecting an ink from an ink-jet recording head (1),

   wherein the ink contains titanium oxide and a wax particle, and
   the ink-jet recording head includes

   an ejection port (13) through which the ink is ejected,
   a pressure chamber (12) having therein an energy-generating element (15) that generates energy for ejecting the ink,
   an ejection port portion configured to communicate between the ejection port and the pressure chamber,
   an individual supply channel (18, 130) communicating with the pressure chamber and configured to supply the ink to the pressure chamber, and
   an individual collecting channel (19, 140) communicating with the pressure chamber and configured to collect the ink from the pressure chamber.

2. The ink-jet recording method according to claim 1, wherein when a circulatory flow is generated such that the ink is caused to flow from an outside into the pressure chamber through the individual supply channel and is caused to flow from the pressure chamber to the outside through the individual collecting channel, a flow of the ink is generated such that the ink flowing from the pressure chamber into the ejection port portion reaches a meniscus position of the ink formed in the ejection port and then returns to the pressure chamber.

3. The ink-jet recording method according to claim 1 or claim 2,
   wherein the ink-jet recording head includes pressure adjusting means (120, 150) arranged to generate a pressure difference such that the ink flows from the individual supply channel toward the individual collecting channel.

4. The ink-jet recording method according to any preceding claim, wherein the ink-jet recording head further includes a pump (500) configured to cause the ink in the individual collecting channel to flow into the individual supply channel.

5. The ink-jet recording method according to claim 4, wherein an ink circulation path where the ink circulates in the ink-jet recording head, the ink circulation path including the pump, the individual supply channel, the pressure

chamber, and the individual collecting channel, has a volume of 30 mL or less.

**6.** The ink-jet recording method according to any preceding claim, wherein the ink-jet recording head is configured to eject the ink while scanning in a scanning direction.

**7.** The ink-jet recording method according to any preceding claim,

wherein, in the ink-jet recording head, a plurality of the ejection ports are arrayed in an array direction to form an ejection port array,
the ink-jet recording head includes a plurality of the pressure chambers, a plurality of the individual supply channels, and a plurality of the individual collecting channels so as to correspond to the plurality of ejection ports, a common supply channel (18) configured to supply the ink to the plurality of individual supply channels and a common collecting channel (19) configured to collect the ink from the plurality of individual collecting channels extend in the array direction, and
an end portion of at least one selected from the common supply channel and the common collecting channel extends to an outside of an end portion of the ejection port array.

**8.** The ink-jet recording method according to claim 7,

wherein the ink-jet recording head includes a plurality of supply ports configured to supply the ink to the common supply channel and a plurality of collection ports configured to collect the ink from the common collecting channel, and
at least one or more of the supply ports and the collection ports are disposed outside the ejection port array.

**9.** The ink-jet recording method according to any preceding claim, wherein the ink-jet recording head further includes first pressure adjusting means (120) arranged to adjust a pressure of the ink in the individual supply channel.

**10.** The ink-jet recording method according to claim 9, wherein the first pressure adjusting means includes a first valve chamber (121), a first pressure control chamber (122), a first opening (191A) that communicates between the first valve chamber and the first pressure control chamber, and a first valve (190A) configured to be capable of opening and closing the first opening.

**11.** The ink-jet recording method according to claim 10, wherein part of a surface of the first pressure control chamber is constituted by a first flexible member (230) configured to be displaceable, and the first pressure control chamber includes a first pressure plate (210) configured to be displaceable together with the first flexible member, and a first urging member (220) that urges the first pressure plate in a direction in which a volume of the first pressure control chamber increases, the first pressure control chamber being configured such that the first valve is openable and closable according to a displacement of the first pressure plate and the first flexible member.

**12.** The ink-jet recording method according to any preceding claim, wherein the ink-jet recording head further includes second pressure adjusting means (150) arranged to adjust a pressure of the ink in the individual collecting channel.

**13.** An ink-jet recording method comprising ejecting an ink from an ink-jet recording head (1),

wherein the ink contains titanium oxide and a wax particle, and
the ink-jet recording head includes

an ejection port (13) through which the ink is ejected,
a pressure chamber (12) having therein an energy-generating element (15) that generates energy for ejecting the ink,
an ejection port portion configured to communicate between the ejection port and the pressure chamber,
a common liquid chamber (603) configured to supply the ink to the pressure chamber,
a common supply channel (601) communicating with the common liquid chamber and configured to supply the ink to the common liquid chamber, and
a common collecting channel (602) communicating with the common liquid chamber and configured to collect the ink from the common liquid chamber.

**14.** An ink for use in an ink-jet recording comprising aqueous medium, a pigment material and wax particles, wherein

the pigment material content amount is between 0.10% or more by mass and 20.00% or less by mass, and wherein the aqueous medium content of the ink is in an amount between 50.00% or more by mass and 95.00% or less by mass.

**15.** The ink according to claim 14, wherein the pigment material comprises surface-treated titanium oxide.

**16.** The ink according to claim 14 or claim 15, further comprising a dispersant for dispersing the wax, wherein the dispersant content amount is between 1.00% or more by mass and 25.00% or less by mass.

FIG. 1A

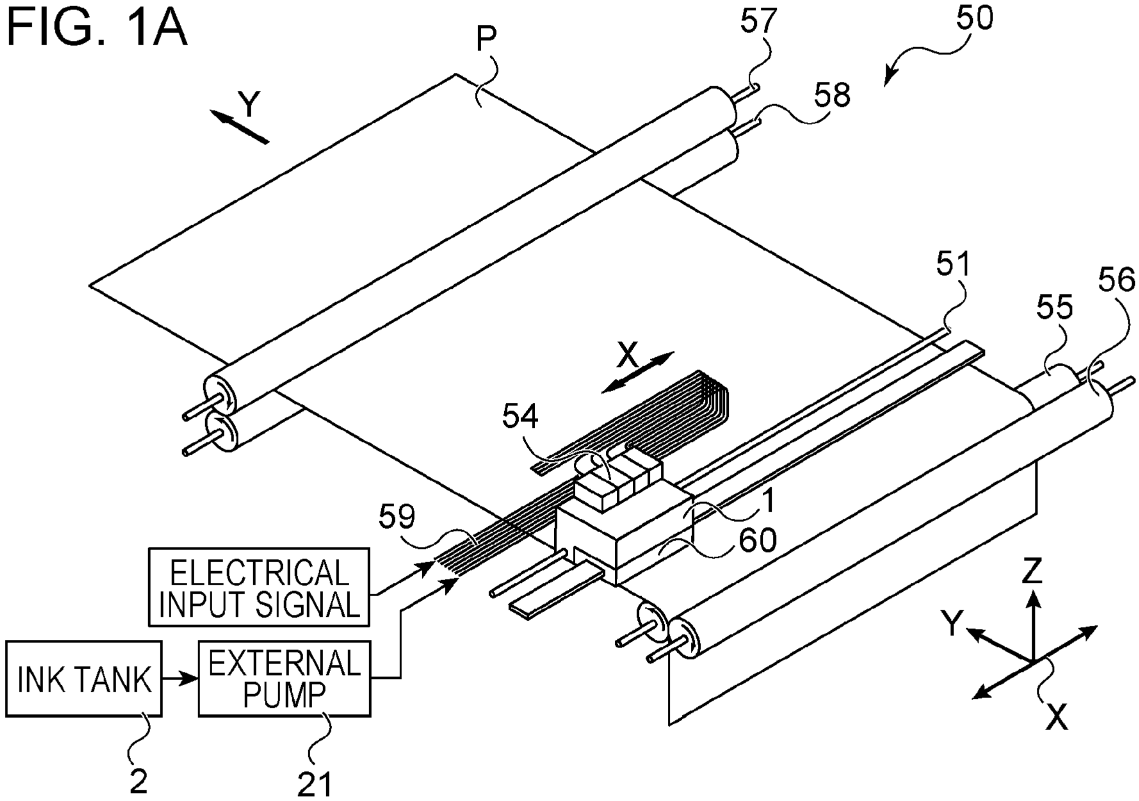
P
57
50
58
Y
51
55
56
X
54
1
59
60
ELECTRICAL
INPUT SIGNAL
INK TANK
EXTERNAL
PUMP
Z
Y
X
2
21

FIG. 1B

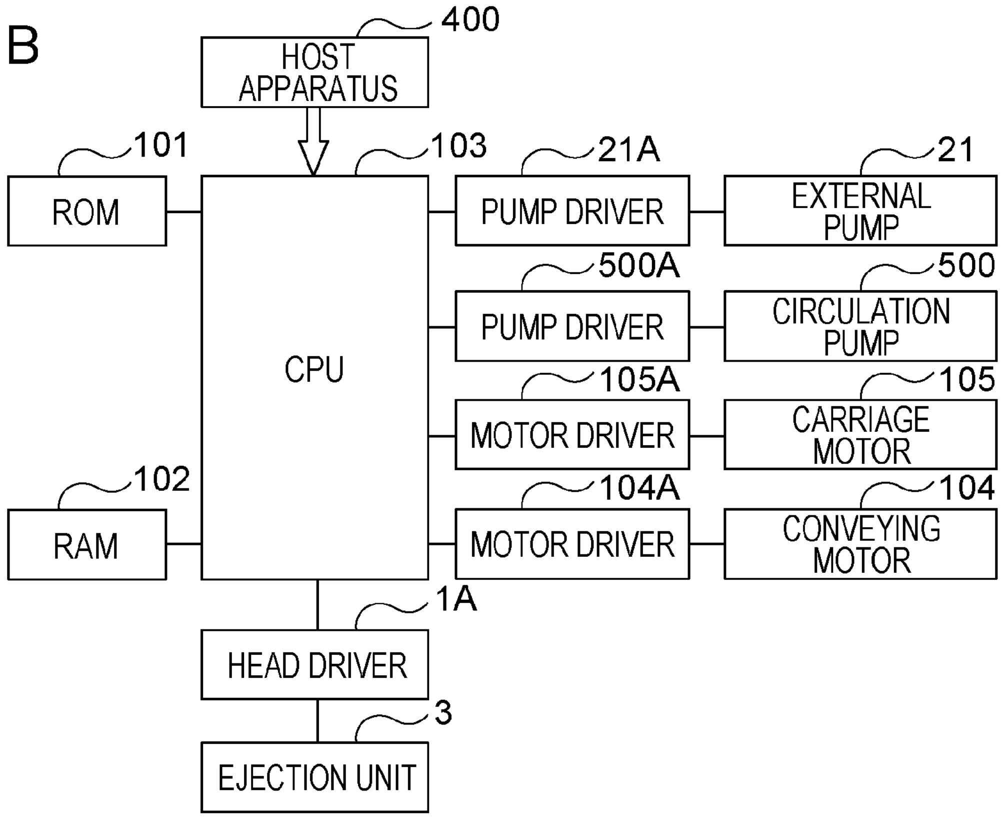
400
HOST
APPARATUS
101
103
21A
21
ROM
PUMP DRIVER
EXTERNAL
PUMP
500A
500
PUMP DRIVER
CIRCULATION
PUMP
CPU
105A
105
MOTOR DRIVER
CARRIAGE
MOTOR
102
104A
104
RAM
MOTOR DRIVER
CONVEYING
MOTOR
1A
HEAD DRIVER
3
EJECTION UNIT

FIG. 2

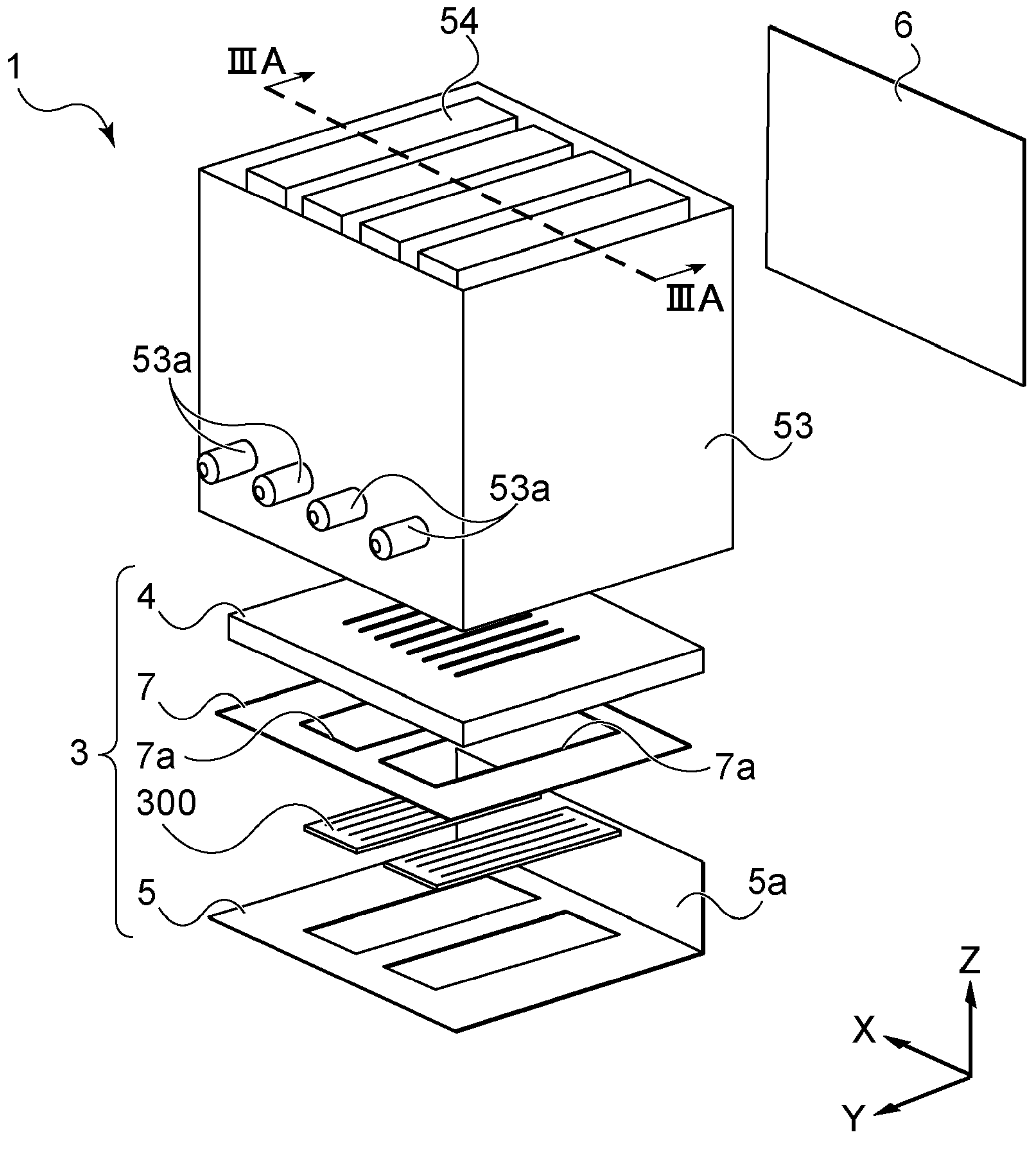

FIG. 3A

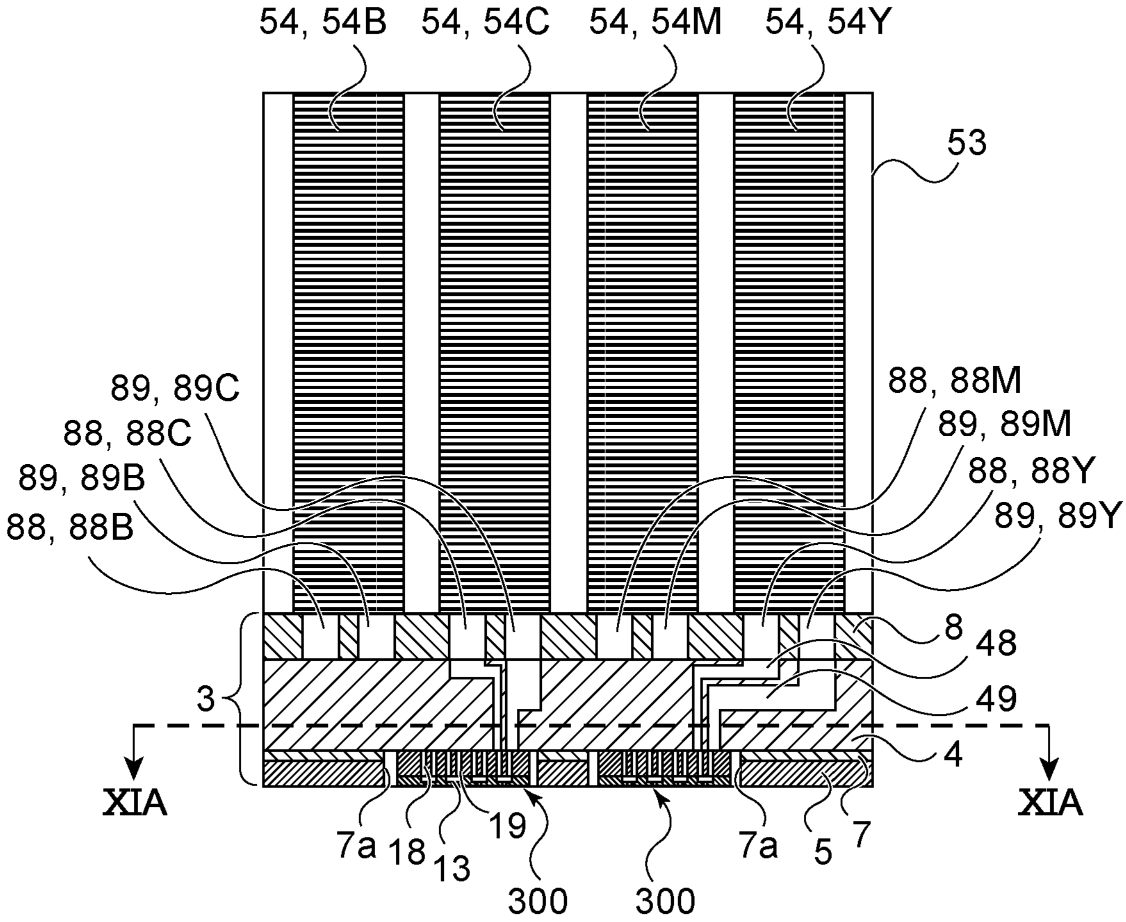
54, 54B
54, 54C
54, 54M
54, 54Y
53
89, 89C
88, 88C
89, 89B
88, 88B
88, 88M
89, 89M
88, 88Y
89, 89Y
8
48
49
3
4
XIA
XIA
7a
18
13
19
300
300
7a
5
7

FIG. 3B

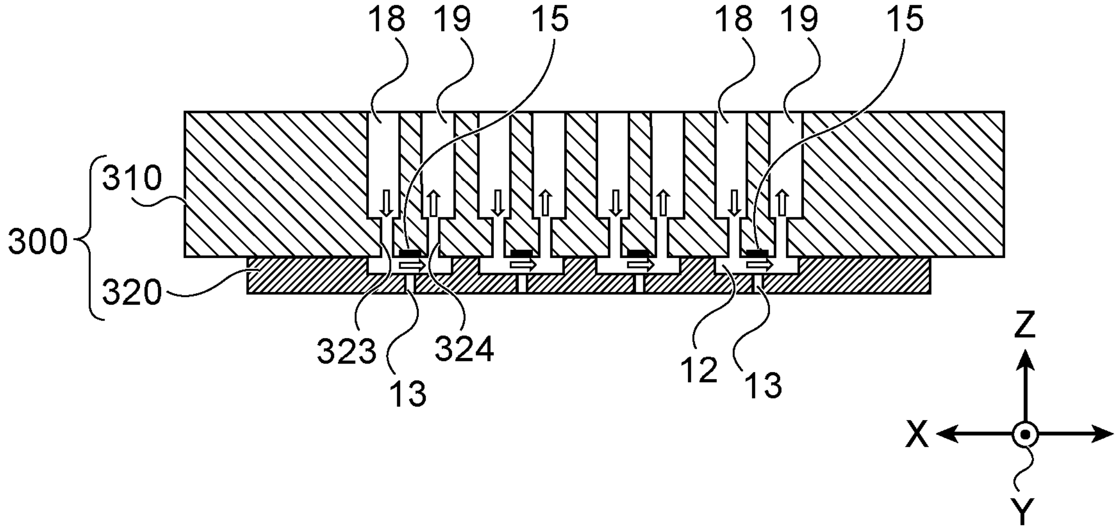
18
19
15
18
19
15
310
300
320
323
13
324
12
13
Z
X
Y

FIG. 4

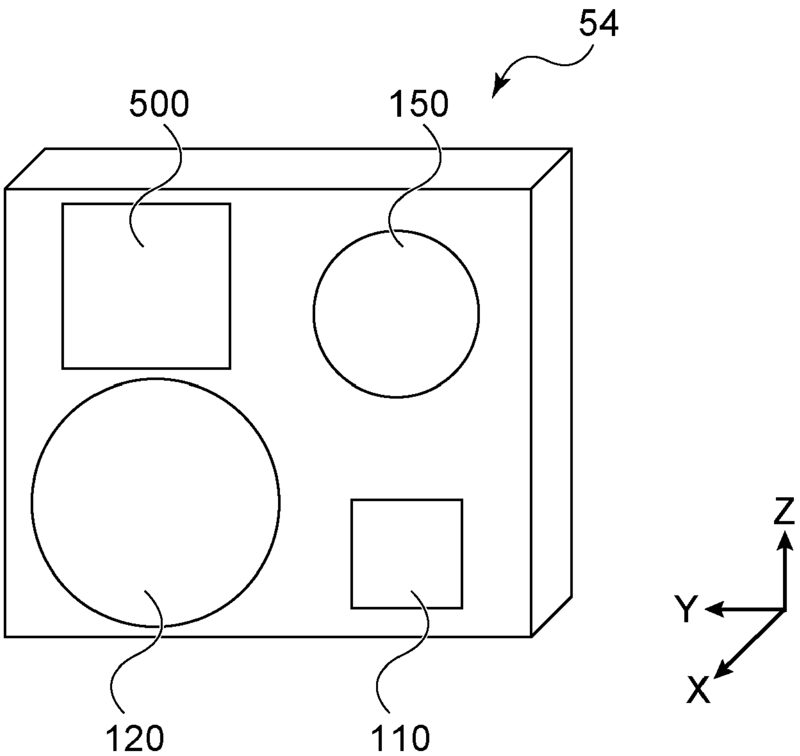

FIG. 5

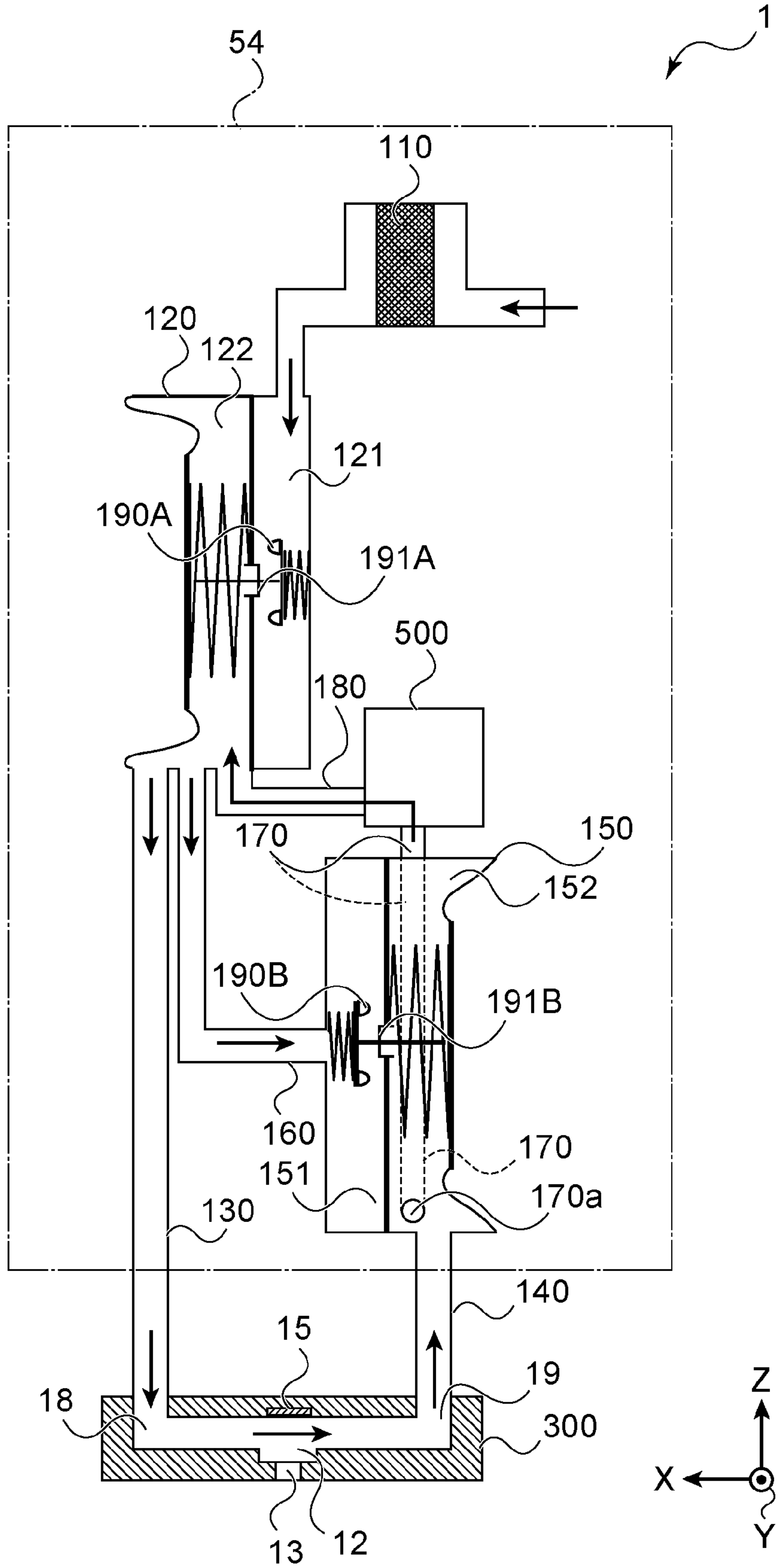
1
54
110
120
122
121
190A
191A
500
180
170
150
152
190B
191B
160
170
151
170a
130
140
15
19
18
300
13
12
Z
X
Y

FIG. 6

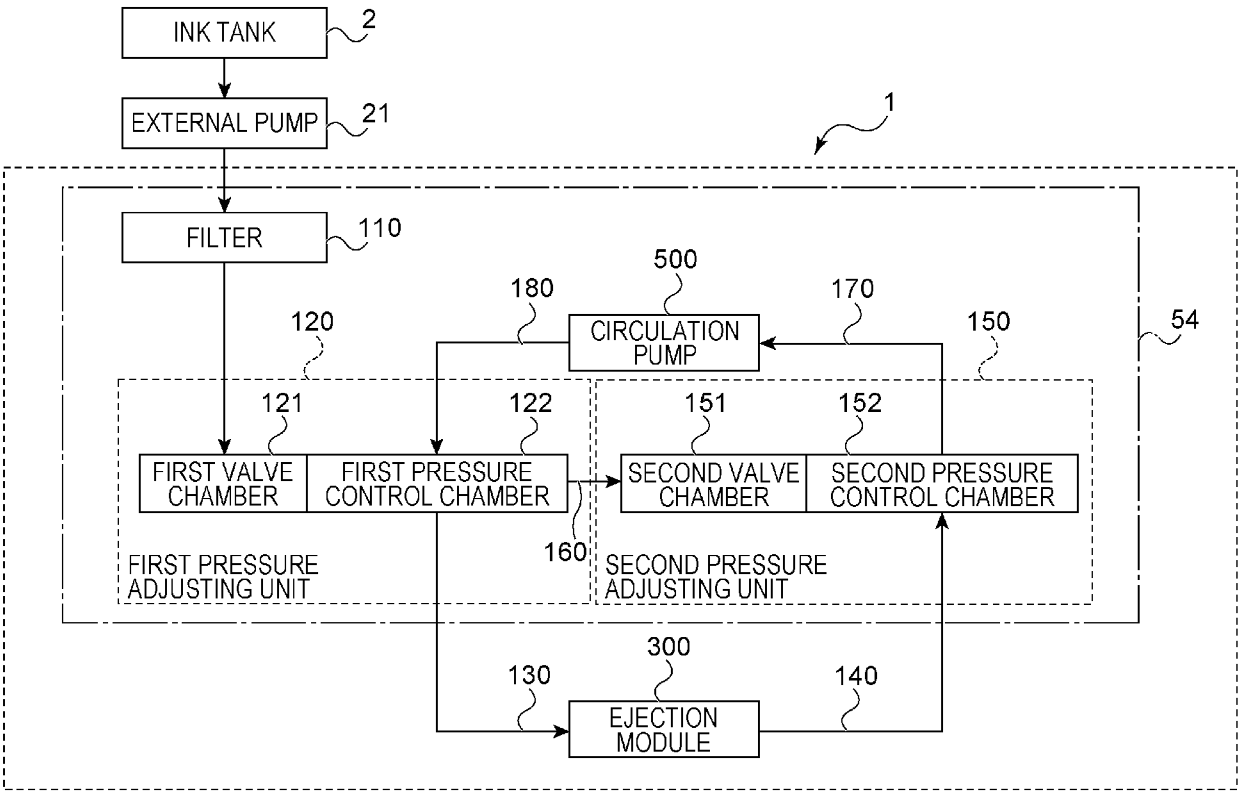
INK TANK
2
EXTERNAL PUMP
21
1
FILTER
110
500
180
170
CIRCULATION PUMP
120
150
54
121
122
151
152
FIRST VALVE CHAMBER
FIRST PRESSURE CONTROL CHAMBER
SECOND VALVE CHAMBER
SECOND PRESSURE CONTROL CHAMBER
160
FIRST PRESSURE ADJUSTING UNIT
SECOND PRESSURE ADJUSTING UNIT
300
130
140
EJECTION MODULE

FIG. 7A

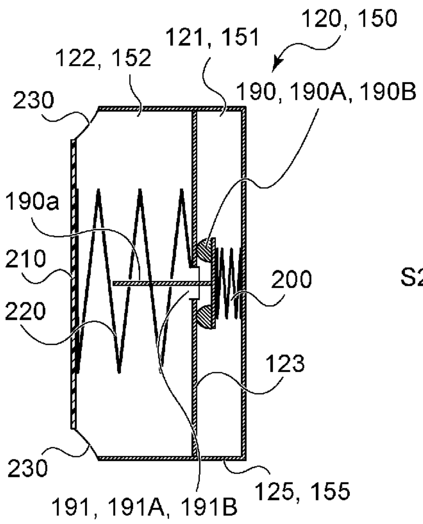


FIG. 7B

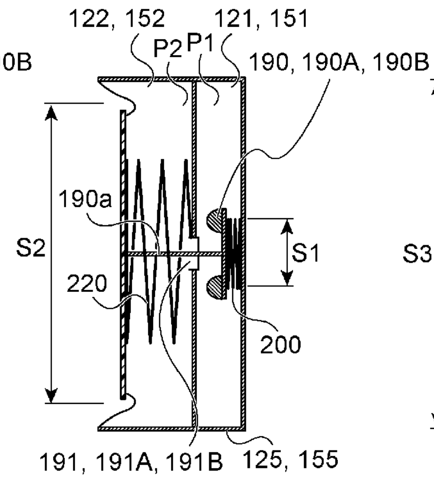


FIG. 7C

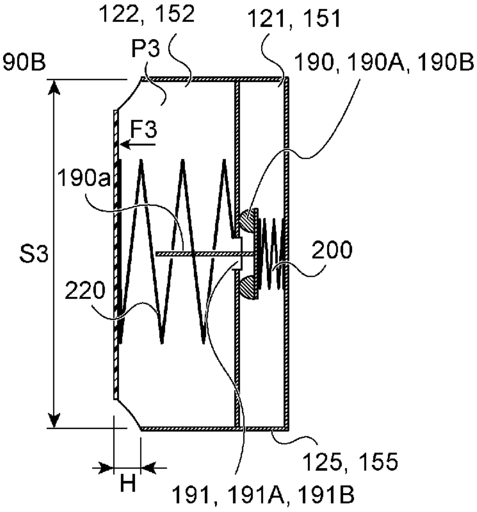

FIG. 8A

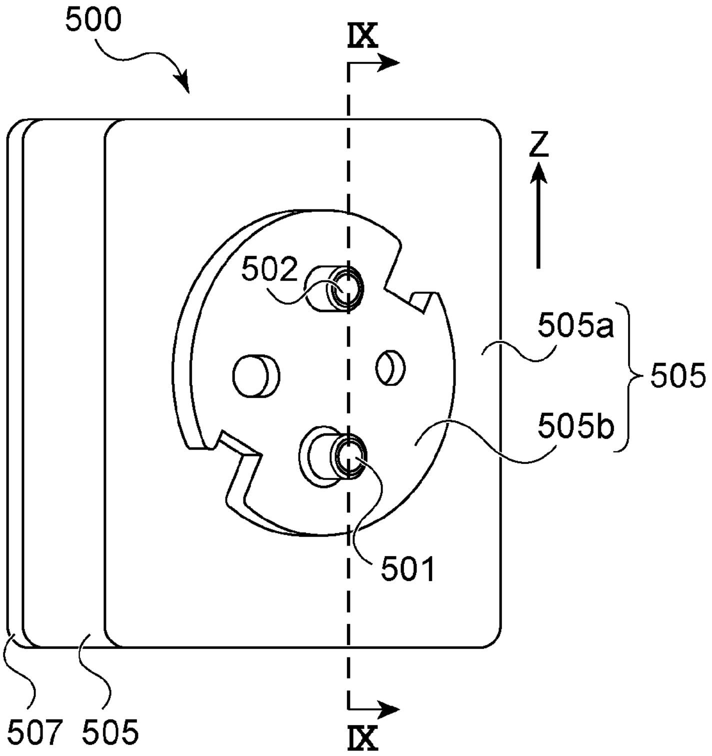


FIG. 8B

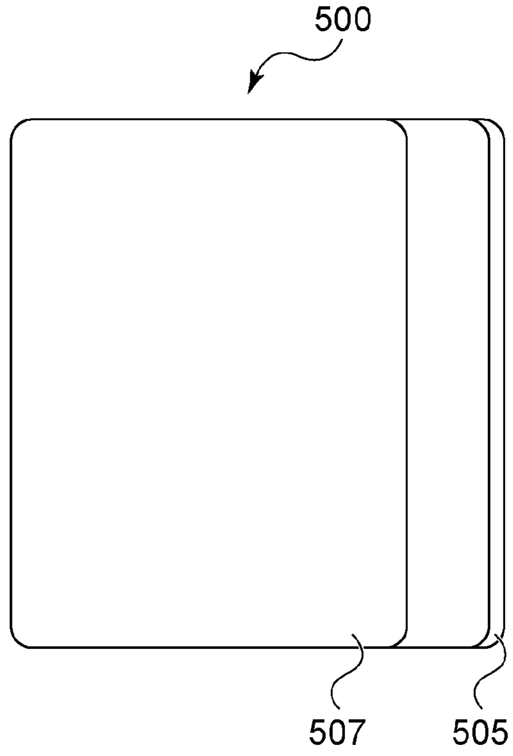

FIG. 9

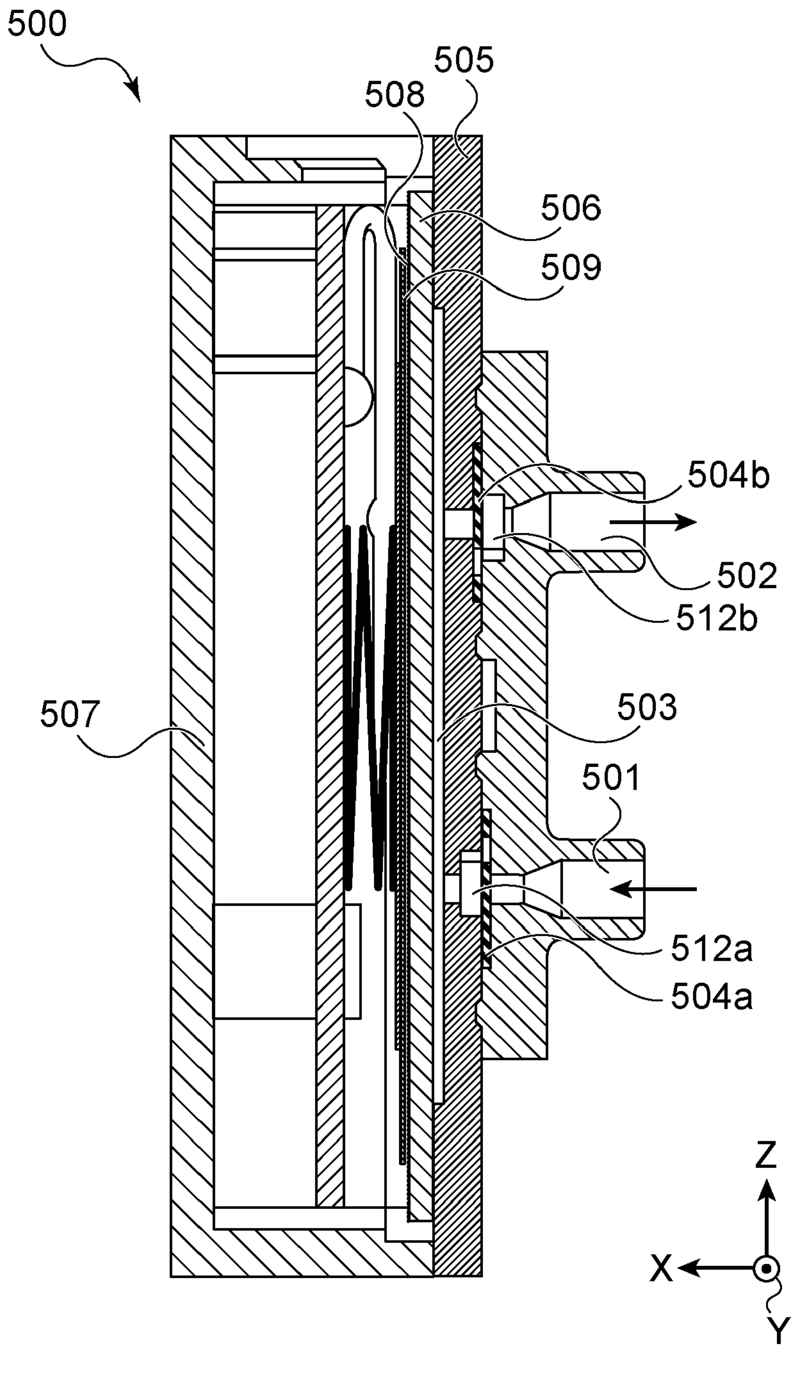

FIG. 10A FIG. 10B FIG. 10C FIG. 10D FIG. 10E

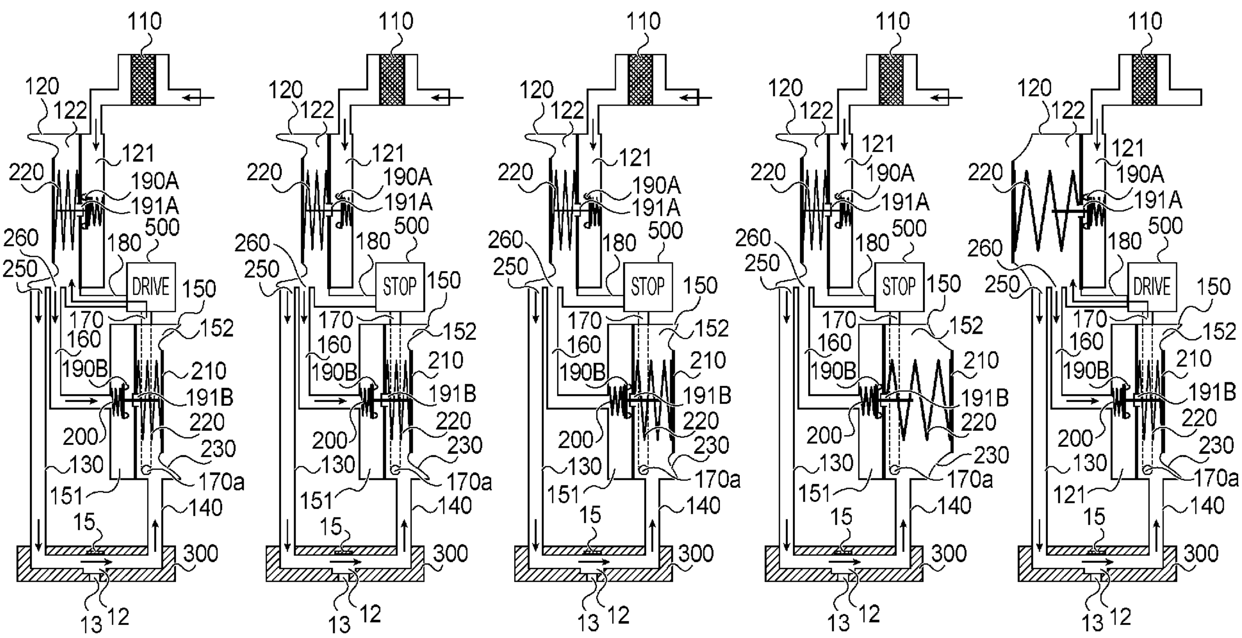

FIG. 11A

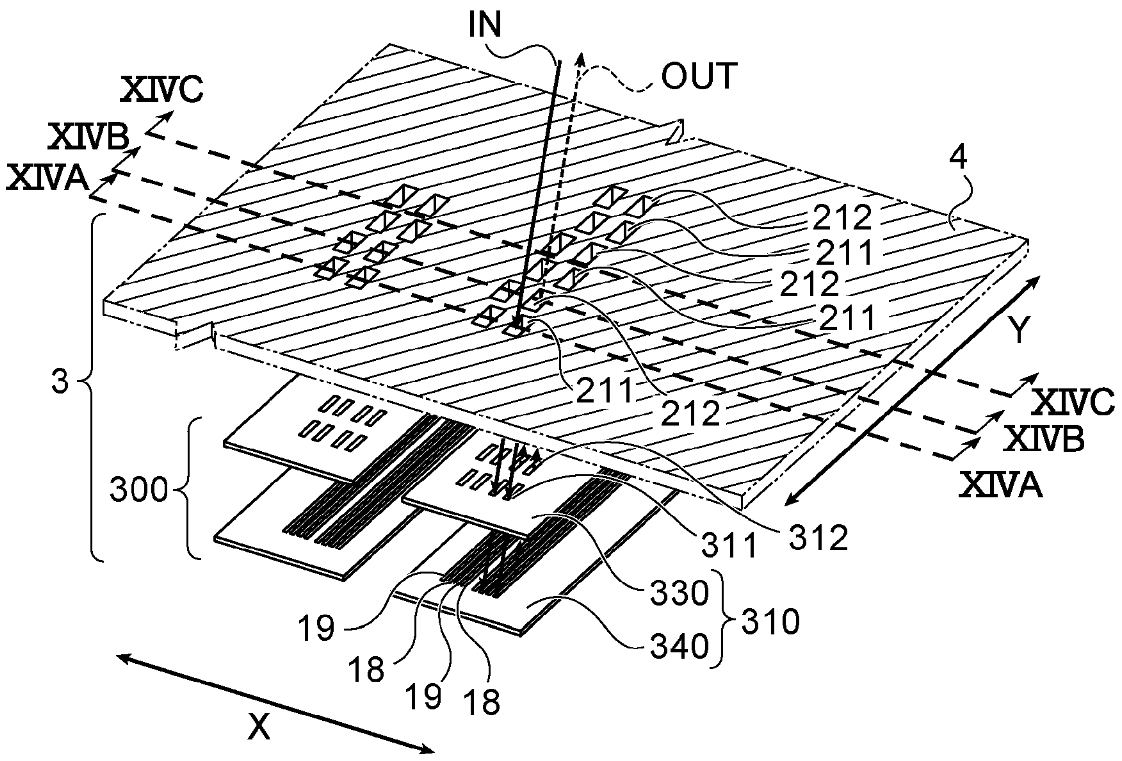


FIG. 11B

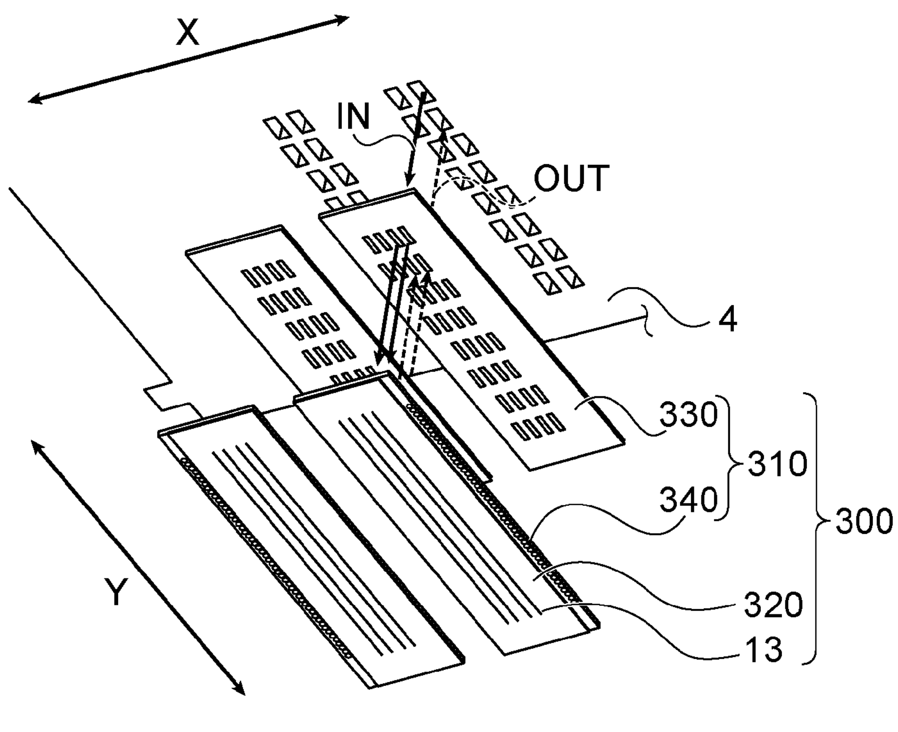

FIG. 12

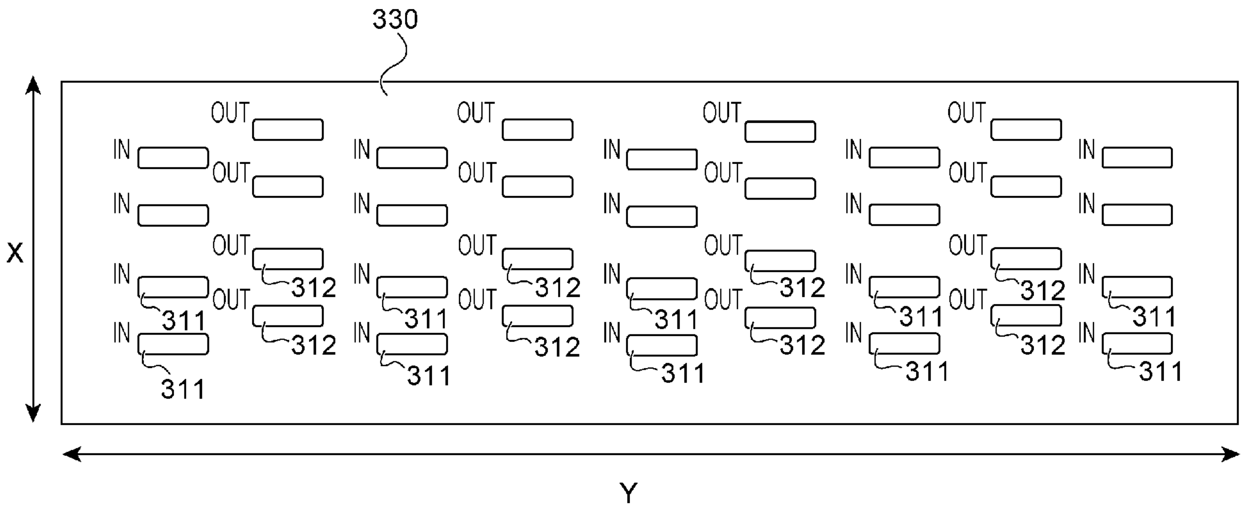

FIG. 13

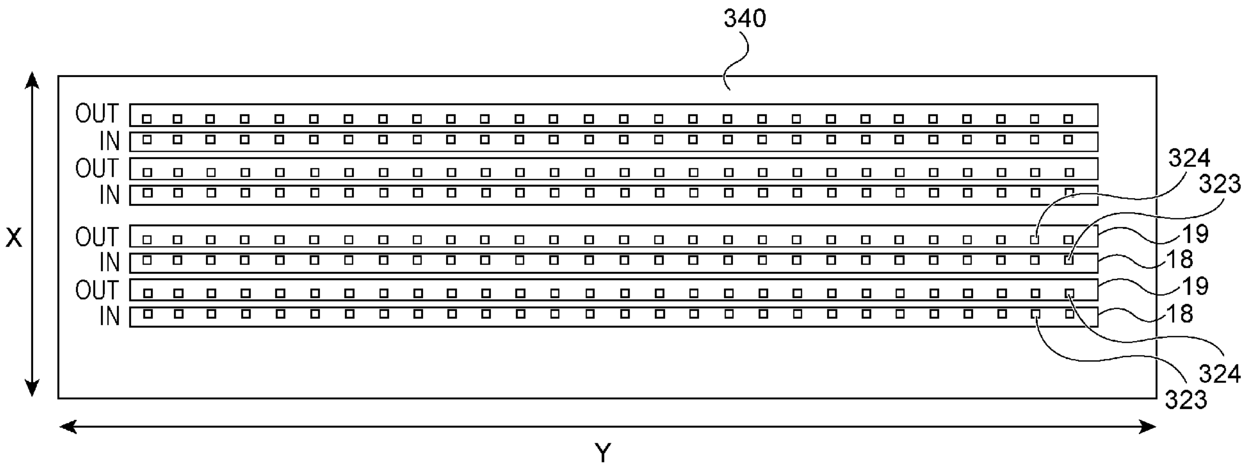

FIG. 14A

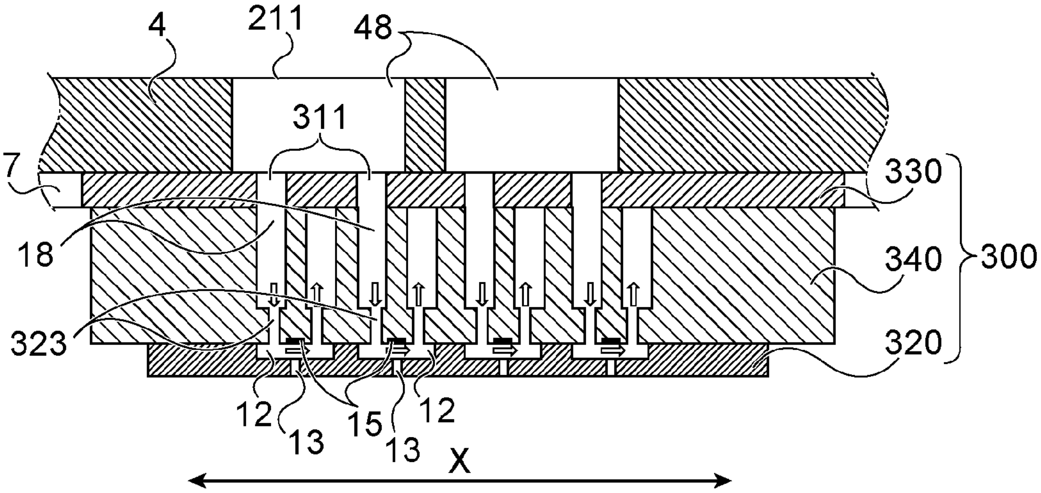


FIG. 14B

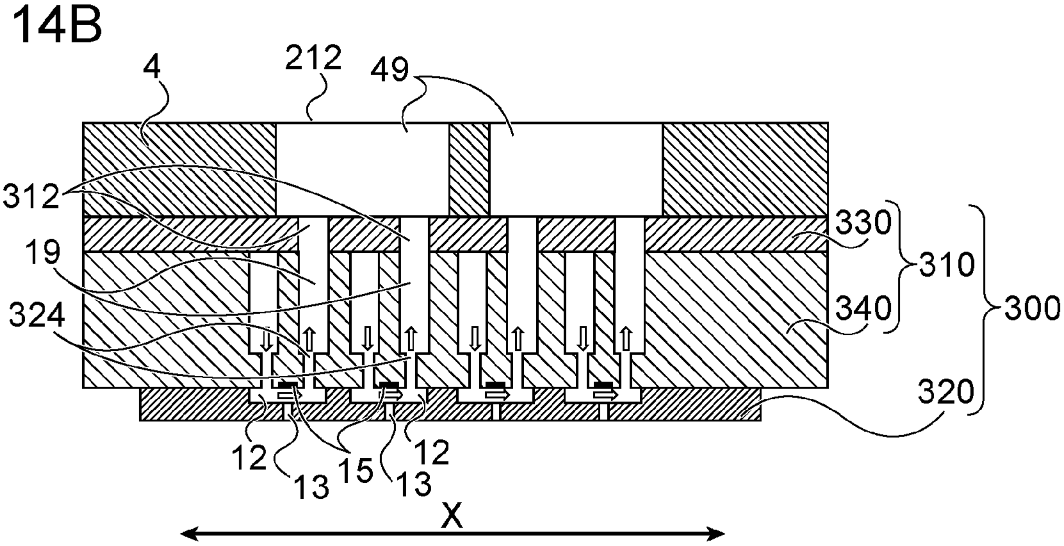


FIG. 14C

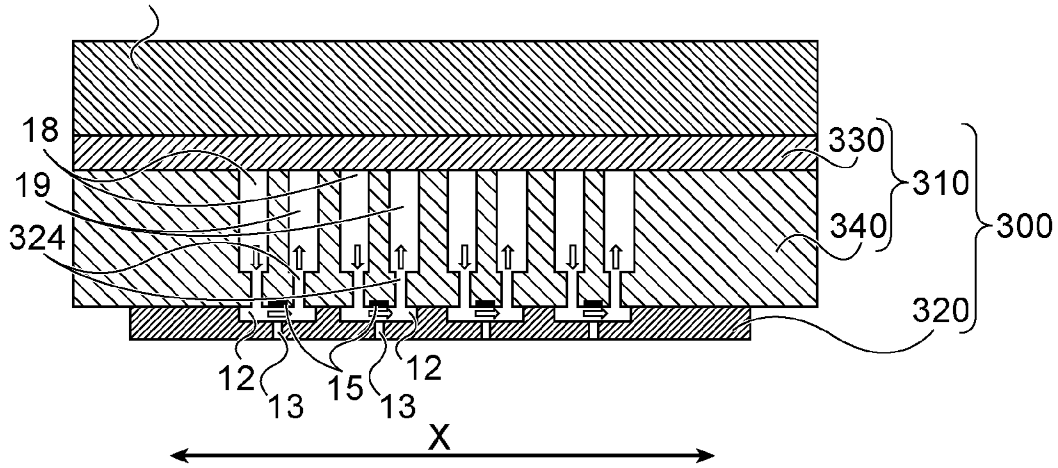

FIG. 15A

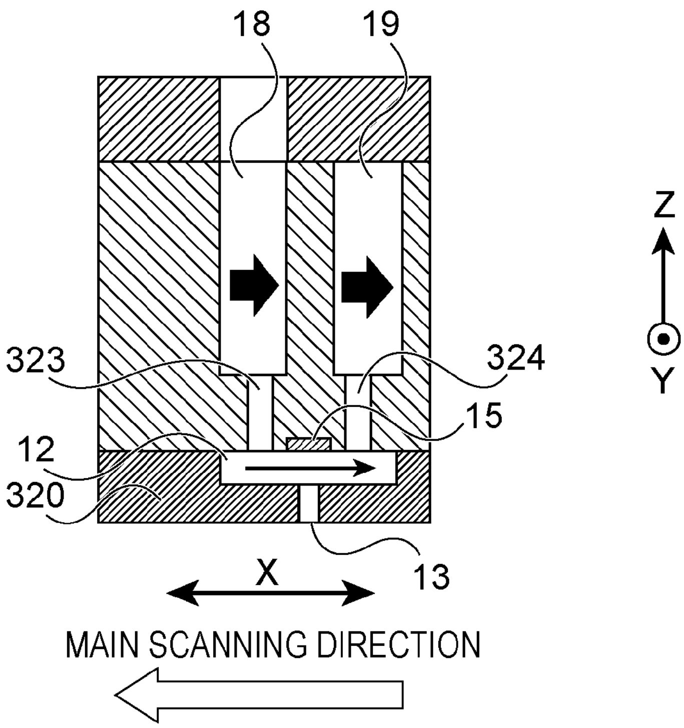


FIG. 15B

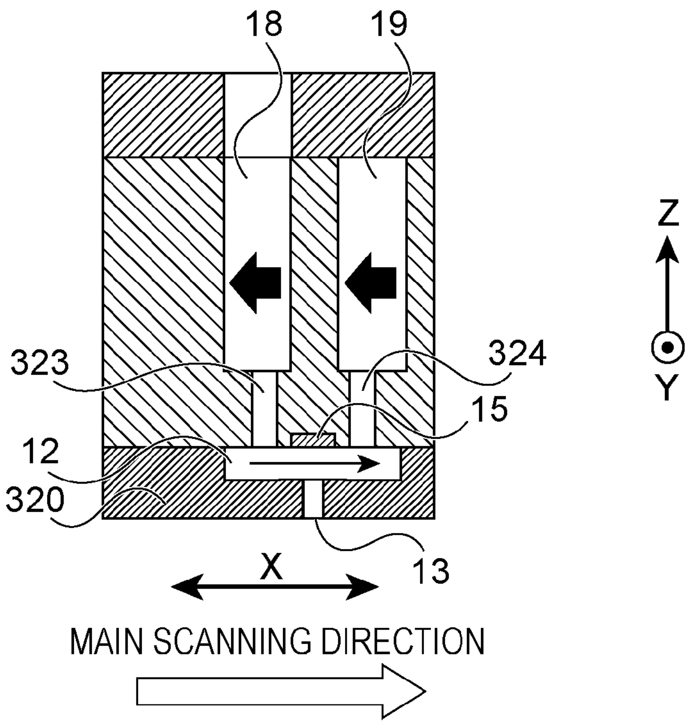

FIG. 16A

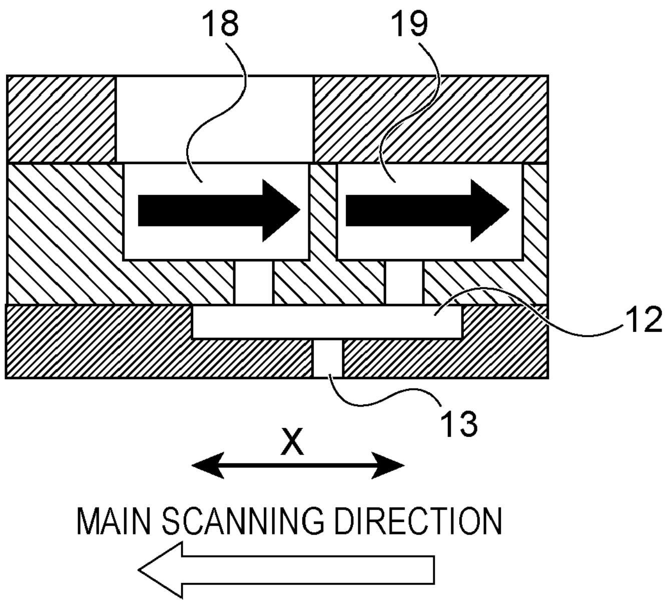


FIG. 16B

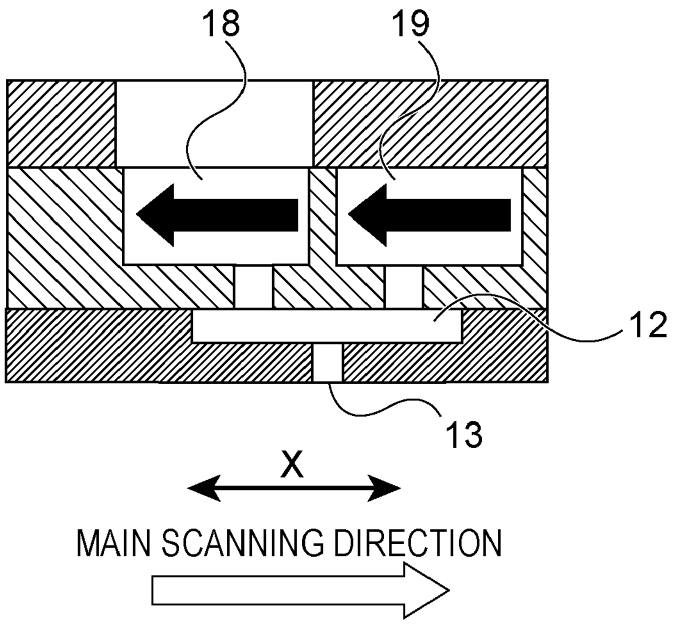

FIG. 17

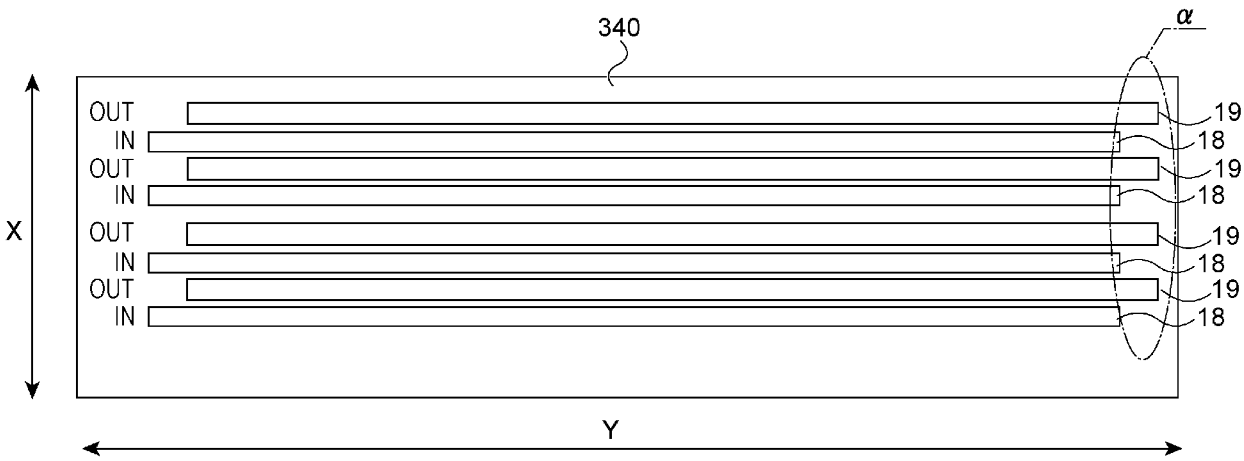

FIG. 18A

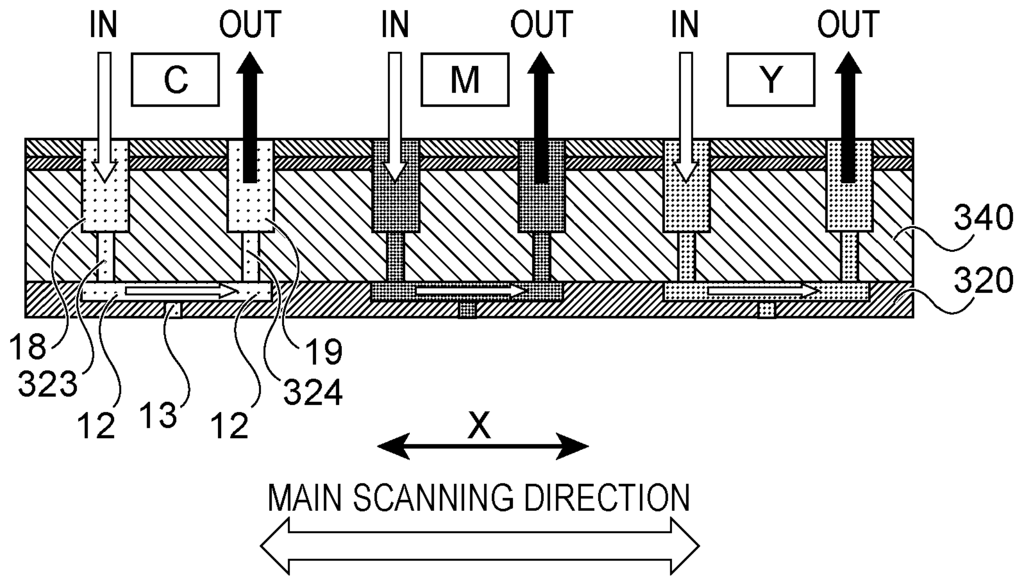


FIG. 18B

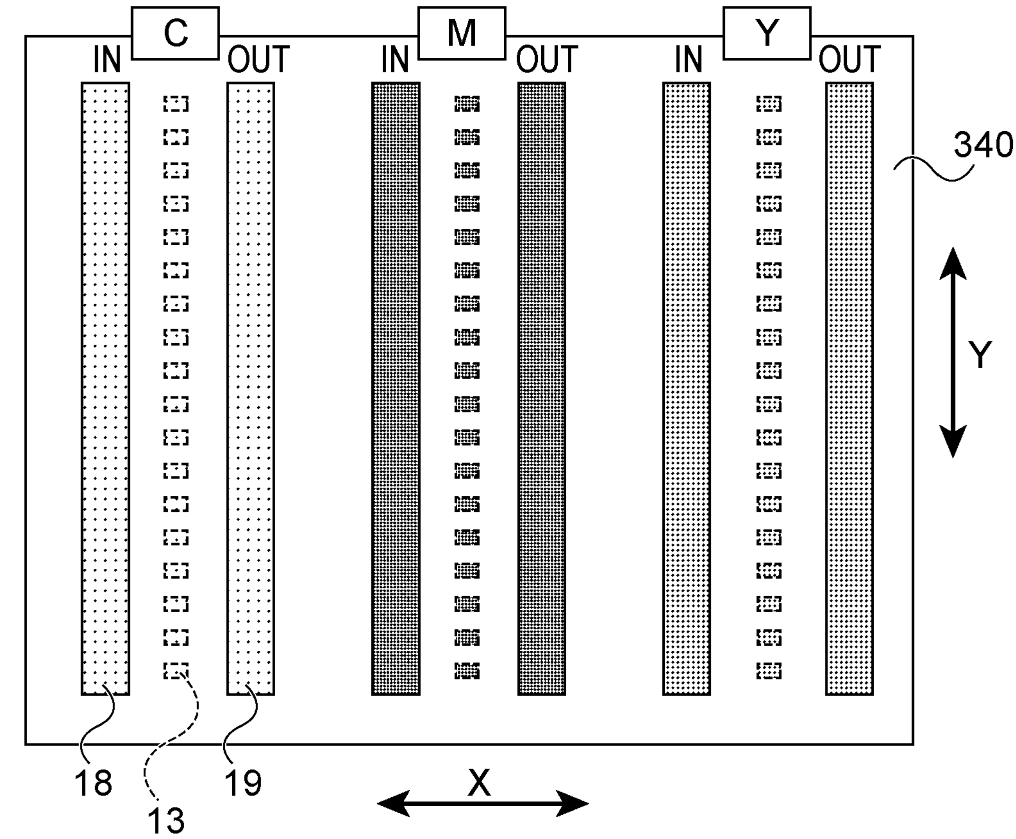

FIG. 19

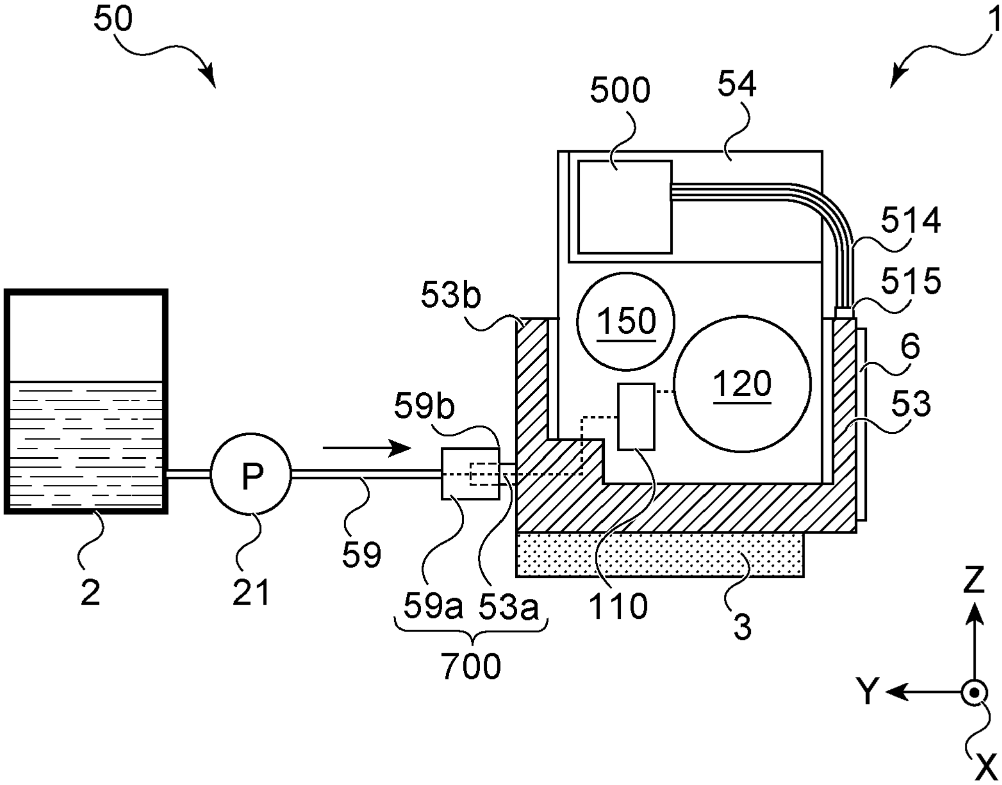
50
1
500
54
514
515
53b
150
120
6
53
59b
P
2
21
59
59a
53a
700
110
3
Z
Y
X

FIG. 20A

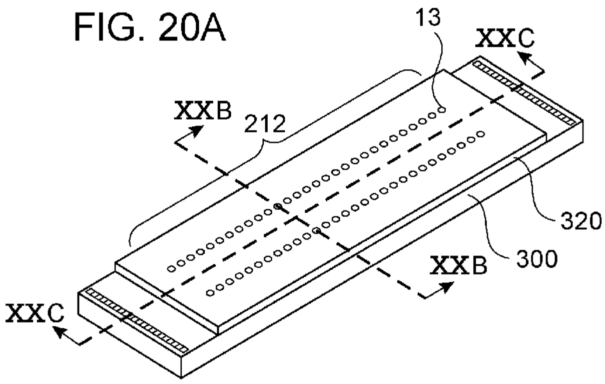


FIG. 20B

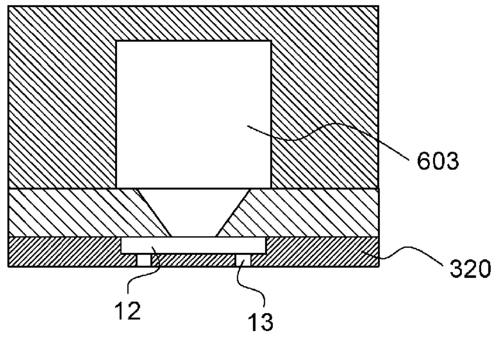


FIG. 20C

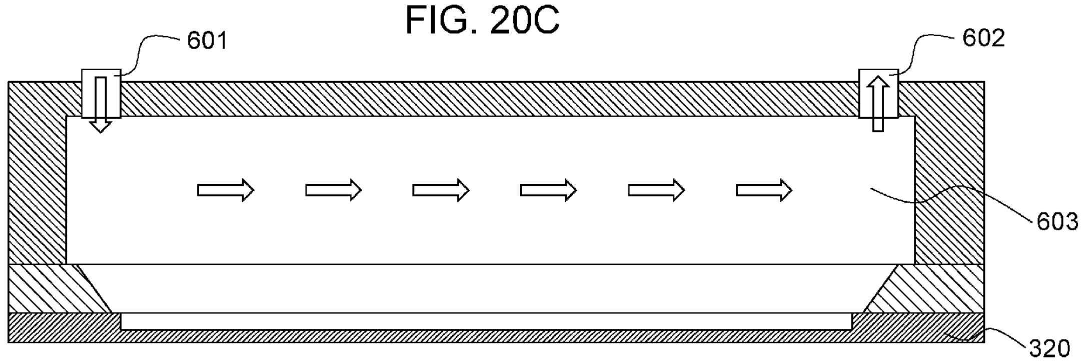

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017521348 W
- WO 2018190848 A